(19)

**Europäisches Patentamt**

**European Patent Office**

**Office européen des brevets**

(11) **EP 4 775 018 A2**

(12) **EUROPEAN PATENT APPLICATION**

(43) Date of publication:
**15.07.2026 Bulletin 2026/29**

(21) Application number: **25213715.3**

(22) Date of filing: **05.11.2025**

(51) International Patent Classification (IPC):
**A01D 41/127** (2006.01)

(52) Cooperative Patent Classification (CPC):
**A01D 41/1273**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **08.01.2025 US 202519013310**

(71) Applicant: **Deere & Company**
**Moline, IL 61265 (US)**

(72) Inventors:
• **Corban, Stephen R.**
**Mannheim (DE)**
• **Keenan, Andrew**
**Mannheim (DE)**
• **Wold, Mathew T.**
**Mannheim (DE)**
• **Bortner, Eric L.**
**Mannheim (DE)**

(74) Representative: **Holst, Sönke**
**John Deere GmbH & Co. KG**
**Mannheim Regional Center**
**Global Intellectual Property Services**
**John-Deere-Strasse 70**
**68163 Mannheim (DE)**

(54) **METHOD OF IMPROVING COMMUNICATION OF GRAIN LOSS ON AN AGRICULTURAL HARVESTER AND SYSTEM THEREOF**

(57) The present invention relates to a method (600) of calibrating grain loss on an agricultural machine (10) harvesting crop and includes initiating a grain loss calibration process (610) on the agricultural machine at a location in a field and receiving (612) grain loss sensor signals from sensors on the agricultural machine. The method also includes identifying the location (614) in the field by a geographic location sensor and sending a communication (616) from a control system on the agricultural machine to perform a grain loss measurement (618). The method may further include receiving the grain loss measurement (620) based on an inspection of grain loss at the location in the field and determining a grain loss calibration value (624) based on the grain loss sensor signals and the grain loss measurement.

Fig. 6

EP 4 775 018 A2

**Description**

**Field of the Disclosure**

The present description relates to agricultural machines and, in particular, to systems and methods for improving loss calibration on an agricultural machine.

**Background of the Disclosure**

There are a variety of different types of agricultural machines. Some agricultural machines include combine harvesters, sugarcane harvesters, cotton harvesters, self-propelled forage harvesters, and windrowers. Some harvesters can include different heads to harvest different types of crops. During harvesting operations, agricultural machines may have harvesting losses. Some of these losses can be detected by material loss sensors on the agricultural harvester. Accurately detecting, categorizing, and reducing harvesting losses may be beneficial for various applications.

**Summary**

In one example implementation of the present disclosure, a method of calibrating grain loss on an agricultural machine configured to harvest crop in a field includes initiating a calibration process of a grain loss monitoring system on the agricultural machine at a location in the field where the grain loss monitoring system includes a first sensor configured to detect grain loss in a separator portion of the agricultural machine and a second sensor configured to detect grain loss in a cleaning shoe portion of the agricultural machine. The method includes receiving grain loss sensor signals from the first sensor and the second sensor, identifying the location in the field by a geographic location sensor, and sending a communication to perform a grain loss measurement, where the communication includes the location at which the grain loss measurement is to be performed. The method also includes receiving the grain loss measurement based on an inspection of grain loss at the location in the field identified by the geographic location sensor and determining a grain loss calibration value based on the grain loss sensor signals and the grain loss measurement.

In one example of this implementation, the method may include adjusting a setting on the agricultural machine based on the grain loss calibration value. In a second example, the method may include sending geospatial data detected by the geographic location sensor to a mobile device. In a third example, the method may include displaying geospatial data detected by the geographic location sensor on a display of an operator interface in the agricultural machine. In a fourth example, the method may include sending geospatial data detected by the geographic location sensor to a second vehicle. In a fifth example, the grain loss measurement is received from the second vehicle.

In a sixth example of this implementation, the method may include marking a position on the agricultural machine indicative of the location. In a seventh example, the method may include producing a visual marker in the field at the location. In another example, the method may include adjusting a header height of the agricultural machine. In yet another example, the method may include adjusting a spreader width of the agricultural machine to discharge a different width of residue from the agricultural machine. In a further example, the method may include controlling a direction of travel of the agricultural machine in a non-linear direction at the location in the field.

In another example implementation of the present disclosure, an agricultural machine configured to harvest crop in a field includes a control system configured to control the agricultural machine and a grain loss monitoring system disposed in communication with the control system, where the grain loss monitoring system includes a first sensor and a second sensor, the first sensor configured to detect grain loss in a separator portion of the agricultural machine and the second sensor configured to detect grain loss in a cleaning shoe portion of the agricultural machine. The agricultural machine includes an operator interface disposed in communication with the control system, where the operator interface is configured to receive instructions from an operator or the control system. The control system is configured to initiate a calibration process of the grain loss monitoring system at a location in the field, receive grain loss sensor signals from the first sensor and the second sensor, identify the location in the field by a geographic location sensor, send a communication to perform a grain loss measurement, the communication including the location at which the grain loss measurement is to be performed, receive the grain loss measurement based on an inspection of grain loss at the location in the field identified by the geographic location sensor, and determine a grain loss calibration value based on the grain loss sensor signals and the grain loss measurement.

In one example of this implementation, the control system is configured to adjust a setting on the agricultural machine based on the grain loss calibration value. In a second example, the control system is in communication with the geographic location sensor and the control system is configured to send geospatial data detected by the geographic location sensor to a mobile device or display the geospatial data on a display of the operator interface. In a third example, the control system is configured to controllably adjust a height of a cutting head of the agricultural machine for identifying the location in the field. In a fourth example, the control system is configured to controllably adjust a spreader width of the agricultural machine to discharge a different width of residue from the agricultural machine at the location. In a fifth example, the control system is configured to control a direction of travel of the agricultural machine in a non-linear direction at the location in the field.

In a further implementation of the present disclosure, a method includes performing a harvesting operation of crop planted in a field by an agricultural machine, initiating a grain loss calibration process on the agricultural machine at a location in the field, and receiving grain loss sensor signals from a first sensor and a second sensor, the first sensor configured to detect grain loss in a separator portion of the agricultural machine and the second sensor configured to detect grain loss in a cleaning shoe portion of the agricultural machine. The method also includes identifying the location in the field by a geographic location sensor and sending a communication from a control system on the agricultural machine to perform a grain loss measurement, the communication including the location at which the grain loss measurement is to be performed. The method further includes receiving the grain loss measurement based on an inspection of grain loss at the location in the field, and determining a grain loss calibration value based on the grain loss sensor signals and the grain loss measurement.

In one example of this implementation, the method may include before initiating a grain loss calibration process, determining whether to perform the grain loss calibration process based on at least one of an amount of time since a previous calibration process was executed, if harvesting different crop types in the field during the harvesting operation, if harvesting different crop varieties in the field during the harvesting operation, a change in moisture of the crop, a relative humidity, an ambient temperature, or if the grain loss sensor signals or the grain loss measurement exceeds a grain loss threshold.

In another example, the method may include before initiating a grain loss calibration process, determining if one or more conditions satisfy one or more stability thresholds.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. The claimed subject matter is not limited to implementations that solve any or all disadvantages noted in the background.

## Brief Description of the Drawings

The above-mentioned aspects of the present disclosure and the manner of obtaining them will become more apparent and the disclosure itself will be better understood by reference to the following description of the implementations of the disclosure, taken in conjunction with the accompanying drawings, wherein:

Fig. 1 is a side view of an example agricultural machine configured to harvest and process crop in a worksite;
Fig. 2A-B is a block diagram showing portions of an agricultural machine in an agricultural system, according to some examples of the present disclosure;
Fig. 3A-B is a flow diagram of one example implementation of a method for calibrating grain loss of an agricultural machine;
Fig. 4 is a flow diagram of another example implementation of a method for calibrating grain loss of an agricultural machine;
Fig. 5 is a flow diagram of another example implementation of a method for calibrating grain loss of an agricultural machine;
Fig. 6 is a flow diagram of a further example implementation of a method for calibrating grain loss of an agricultural machine;
Figs. 7A-B is a flow diagram of an example implementation of a method for calibrating grain loss of an agricultural machine;
Fig. 8 is a table illustrating grain loss calibration during execution of the method of Figs. 7A-B; and
Fig. 9 is a flow diagram of another example implementation of a method for calibrating grain loss of an agricultural machine.

Corresponding reference numerals are used to indicate corresponding parts throughout the several views.

## Detailed Description

The implementations of the present disclosure described below are not intended to be exhaustive or to limit the disclosure to the precise forms in the following detailed description. Rather, the implementations are chosen and described so that others skilled in the art may appreciate and understand the principles and practices of the present disclosure.

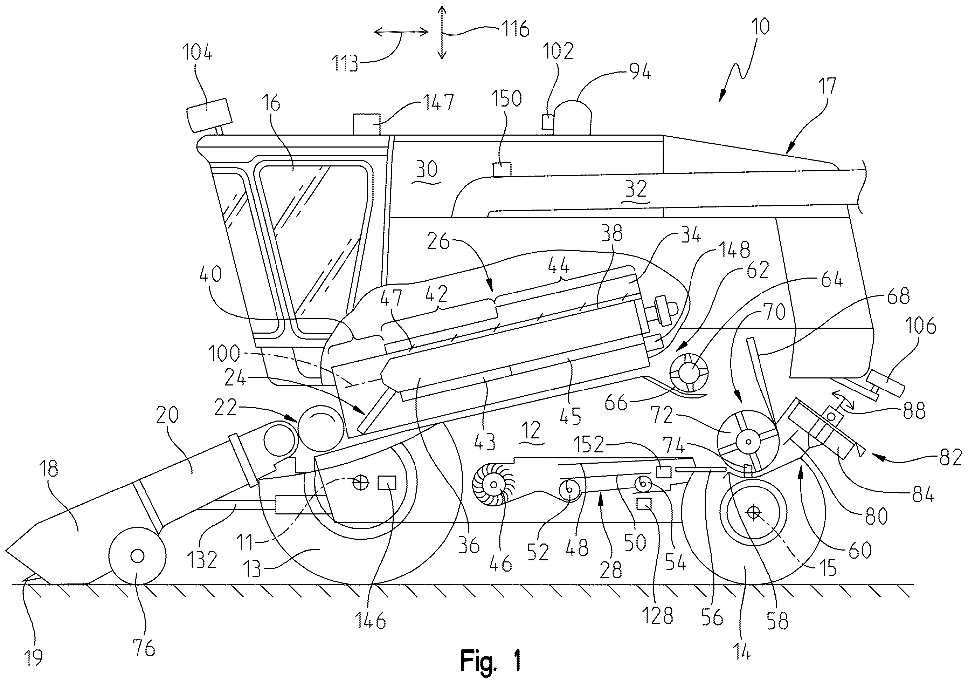

In Fig. 1, an implementation of an agricultural machine 10 is shown. The agricultural machine 10 includes a chassis 12, one or more front ground engaging mechanisms 13, and one or more rear ground engaging mechanisms 14.

The front and rear ground engaging mechanisms 13, 14 may be wheels or tracks that are in contact with an underlying ground surface and support the chassis 12 above the ground. In the illustrative implementation, the one or more front ground engaging mechanisms 13 are coupled to a front axle 11 that extends laterally, and the one or more rear ground engaging mechanisms 14 are coupled to a rear axle 15 that extends laterally. The front and rear axles 11, 15 each have respective centerlines, which, in the illustrative implementation, are defined as the axial midpoints thereof, where the axial direction is shown by the double-headed arrow 113 in Fig. 1. In the illustrative implementation, the axial direction and the lateral direction are perpendicular to one another. As shown in Fig. 1, the double headed arrow 116 represents the vertical direction, which in the illustrative implementation, is perpendicular to the axial and lateral directions.

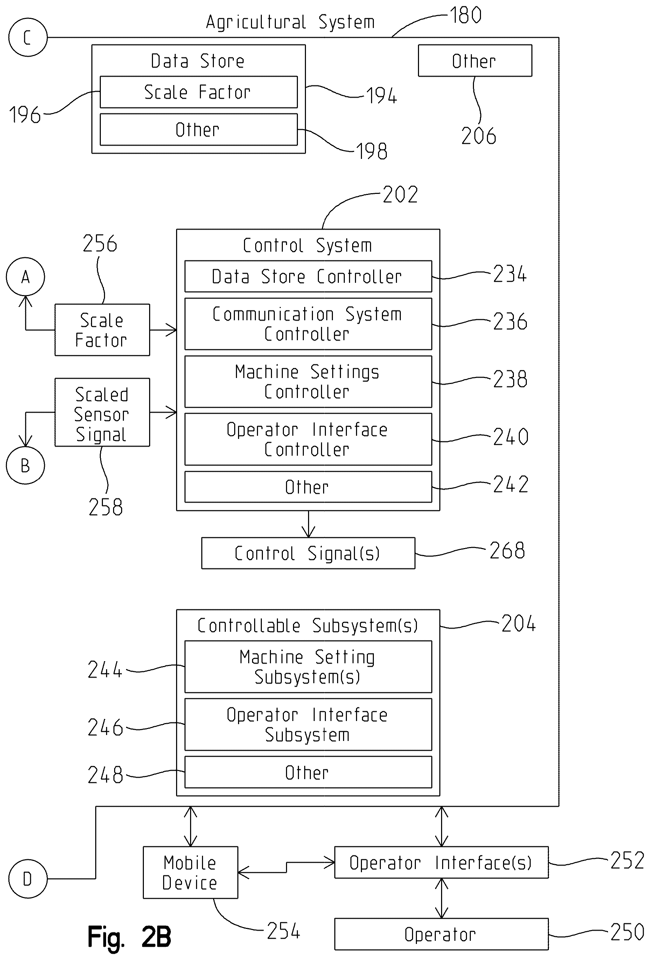

In the illustrative implementation, the one or more front and rear ground engaging mechanisms 13, 14 are coupled to the chassis 12 and configured to rotate to move the agricultural machine 10 in a forward operating direction (which is to the left in Fig. 1) and in other directions. In some implementations, operation of the agricultural machine 10 is controlled from an operator's cab 16. The operator's cab 16 may include any number of controls for controlling the operation of the agricultural machine 10, such as a user or operator interface 252 (see Fig. 2B). In some implementations, operation of the agricultural machine 10 may be conducted by a human operator in the operator's cab 16, a remote human operator via a mobile device 254 (e.g., laptop, tablet, mobile phone, etc.), or an automated system.

A cutting head 18 is disposed at a forward end of the agricultural machine 10 and is configured to harvest crop and to conduct harvested crop to a slope conveyor 20. The term harvested crop as used herein includes grain (e.g., corn, wheat, soybeans, rice, oats) and material other than grain (MOG). The cutting head 18 may be a draper, a belt pick-up assembly, a corn head, a cutting platform with a reel assembly, or any other cutting head configured to harvest crop in a work area such as a field. The cutting head 18 includes a mechanism 19 at a forward end thereof for harvesting the crop. Upon receiving the harvested crop from the cutting head 18, the slope conveyor 20 conducts the harvested crop to a guide drum 22. The guide drum 22 guides the harvested crop to an inlet 24 of a threshing assembly 26, as shown in Fig. 1. In the illustrative implementation, various sub-systems of the agricultural machine 10, such as the threshing assembly 26, a clean crop routing assembly 28, a crop debris routing assembly 60, and a residue assembly 82, cooperate to process the harvested crop.

The threshing assembly 26 includes a housing 34 and one or more threshing rotors. A single threshing rotor 36 is shown in Fig. 1. The threshing rotor 36 includes a drum 38 arranged along a threshing axis 100, and the threshing rotor 36 rotates about the threshing axis 100. The threshing assembly 26 further includes a charging section 40, a threshing section 42, and a separating section 44. The charging section 40 is arranged at a front end of the threshing assembly 26, the separating section 44 is arranged at a rear end of the threshing assembly 26, and the threshing section 42 is arranged between the charging section 40 and the separating section 44. The threshing assembly 26 further includes a thresher basket 43 that is positioned in the threshing section 42 and below the threshing rotor 36, guide vanes 47 that are positioned above the threshing rotor 36, and a separating grate 45 that is positioned in the separating section 44 and below the threshing rotor 36. In the illustrative implementation, the guide vanes 47 guide harvested crop rearwardly through the threshing assembly 26, and the harvested crop is separated and expands as it engages with the guide vanes 47. Harvested crop falls through the thresher basket 43 and through the separating grate 45.

The harvested crop may be directed to the clean crop routing assembly 28 with a blower 46 and sieves 48, 50 with louvers. The sieves 48, 50 can be oscillated axially. The clean crop routing assembly 28 removes MOG and guides grain over a screw conveyor 52 to a grain elevator 94. The grain elevator 94 deposits the grain in a grain tank 30, as shown in Fig. 1. The agricultural machine 10 includes a sensor 102 that is, for example, positioned on the grain elevator 94 and configured to measure a grain yield of the harvested crop. In the illustrative implementation, the yield sensor 102 measures the force of the grain contacting the sensor 102 to determine the yield. The grain in the grain tank 30 can be unloaded by means of an unloading screw conveyor 32 to a grain wagon, trailer, or truck, for example.

Harvested crop remaining at a rear end of the sieve 50 is again transported to the threshing assembly 26 by a screw conveyor 54 where the harvested crop is reprocessed by the threshing assembly 26. Harvested crop remaining at a rear end of the sieve 48 is conveyed by an oscillating sheet conveyor 56 to a lower inlet 58 of a crop debris routing assembly 60. Harvested crop at the threshing assembly 26 is processed by the separating section 44 resulting in straw being separated from other material of the harvested crop. The straw is ejected through an outlet 62 of the threshing assembly 26 and conducted to an ejection drum 64. The ejection drum 64 interacts with a sheet 66 arranged underneath the ejection drum 64 to move the straw rearwardly. A wall 68 is located to the rear of the ejection drum 64 and guides the straw into an upper inlet 70 of the crop debris routing assembly 60. In the crop debris routing assembly 60, blades of a rotatable chopper interact with knives to chop the straw into smaller harvested crop residue.

Harvested crop residue moves from the crop debris routing assembly 60 to the residue assembly 82 for optional subsequent processing and ejection from the agricultural machine 10. For example, as shown in Fig. 1, the residue assembly 82 includes one or more spreaders provided downstream of an outlet 80 of the crop debris routing assembly 60. One spreader 84 is shown in Fig. 1. Rotation of blades of the spreader 84 about an axis 88 spreads the chopped straw as the chopped straw exits the agricultural machine 10. In some implementations, the agricultural machine 10 includes a sensor 106, such as a camera, that is positioned at the rear end of the agricultural machine 10 and configured to capture one or more images of an additional field of view that includes, for example, chopped straw output from the agricultural machine 10 via the residue assembly 82.

It should be appreciated that while an exemplary agricultural machine 10 is described with reference to Fig. 1, aspects of the disclosure (e.g., the control system and methods herein) are applicable to various agricultural machines configured to harvest crop.

In some implementations, the agricultural machine 10 includes at least one image sensor (e.g., sensors 104, 106) configured to capture one or more images of a field of view external to the agricultural machine 10. In Fig. 1, at least one image sensor 104, 106 is embodied as a camera. It should be appreciated that in some implementations, the at least one image sensor 104, 106 may be embodied as one or more cameras (e.g., optical or visual radiation cameras or red, green, blue (RGB) cameras), LiDAR sensors, radar sensors (e.g., long-range terahertz radar, mm wave radar, ultra wideband radar, frequency-modulated continuous wave radar (FMCW), ground penetrating radar), ultrasonic sensors, thermal sensors (e.g., a thermal cameras), stereo cameras, laser vibrometers, infrared nuclear magnetic resonance (NMR) cameras, infrared short-wave infrared (SWIR) cameras, infrared terahertz sensors, or other sensors operable to capture or generate one or more images or data corresponding to the one or more images of the field of view.

In some implementations, the field of view includes an area underneath a portion of the chassis 12, where the term underneath means vertically below and aligned with axially and laterally. In some implementations, the at least one image sensor includes an image sensor located underneath at least one of the threshing assembly 26 and the clean crop routing assembly 28. In some implementations, the field of view is defined to exclude an area underneath the cutting head 18. In some implementations, the field of view is defined to exclude an area forward of the crop cutting devices (e.g., cutting knives) of the cutting head 18, which, in some implementations, are positioned at a forward end of the cutting head 18. In some implementations, the field of view is defined to exclude an area underneath or otherwise axially aligned with the slope conveyor 20, the cutting head 18, or both. In some implementations, the field of view is defined to exclude an area underneath or otherwise axially aligned with the residue assembly 82. In some implementations, the field of view is defined to exclude any area configured to receive harvested crop (e.g., straw) output by the residue assembly 82.

In some implementations, the at least one image sensor is directed vertically downward (i.e., toward the ground) and laterally inward (i.e., toward a lateral midpoint of the agricultural machine 10) to define the field of view. In the illustrative implementation shown in Fig. 1, the agricultural machine 10 includes side walls, which are illustrated as transparent to show components of the agricultural machine that are laterally adjacent to the side walls. In the illustrative implementation, the side walls terminate at a lower edge 17. It should be appreciated that the threshing assembly 26 and the clean crop routing assembly 28 are positioned laterally between opposite side walls of the agricultural machine 10. In some implementations, the at least one image sensor is coupled to one or more of the side walls.

Referring still to Fig. 1, in the illustrative implementation, the agricultural machine 10 includes a sensor 104, such as a camera, positioned on a forward portion of the agricultural machine 10 and configured to capture images associated with a field of view directed to an area forward of the agricultural machine 10. The sensor 104 is configured to capture images of crop in a work area such as the field to be harvested.

In the illustrative example of Fig. 1, the agricultural machine 10 includes a ground speed sensor 146, one or more separator loss sensors 148, a clean grain camera 150, which may be in the form of a stereo or mono camera, and one or more loss sensors 152 provided in the clean crop routing assembly 28. Ground speed sensor 146 senses the travel speed of agricultural machine 10 over the ground. Ground speed sensor 146 may sense the travel speed of the agricultural machine 10 by sensing the speed of rotation of the ground engaging components (such as wheels or tracks), a drive shaft, an axle, or other components. In some instances, the travel speed may be sensed using a geographic location sensor 147, such as a global positioning system (GPS), another global navigation satellite system (GNSS), a dead reckoning system, a cellular triangulation system, or a wide variety of other systems or sensors that provide an indication of the location of the agricultural machine 10 in a global or local coordinate system. Travel speed can be sensed or derived from a plurality of outputs from the geographic location sensor 147.

Unless otherwise specified, with respect to the contents of this application, the term "grain loss" refers to grain that does not fall through the sieve 48, but instead is carried off to the crop debris routing assembly 60 as described above. It is to be understood that this lost grain may be discarded to the environment with the MOG or may otherwise enter a secondary collection in which the grain is eventually separated from the MOG and transferred to the grain tank 30 (and is therefore not "lost" in the traditional sense).

Tailings, which may be referred to as grain that is only partly or incompletely threshed, may not pass through the sieves 48, 50. Because tailings are too heavy to be blown out with the MOG under the influence of the blower 46, the tailings pass from the clean crop routing assembly 28 to a tailings section on the machine 10. The tailings section is designed to return tailings to one of the threshing assembly 26 (i.e., threshing portion) or clean crop routing assembly 28 (i.e., cleaning portion) for re-threshing and, thus, recapturing of the grain carried with the tailings. The volume or amount of tailings being recycled depends on the efficiency of the threshing and cleaning portions of the agricultural machine 10. Efficiency of the threshing and cleaning portions is determined by factors such as, for example, the clearance between a threshing cylinder and housing, threshing speed, adjustment of the sieves 48, 50, output of the blower 46, and the volume of crop material input into the machine 10. If the volume or amount of tailings presented for return is excessive, the machine 10 will tend to "plug up" with grain. A sensing device or tailings volume sensor 128 may be disposed in one implementation near a tailings auger (not shown) at a rear of the agricultural machine 10 and is configured to generate a sensor signal 260 indicative of the quantity or volume of tailings on the operator interface 252.

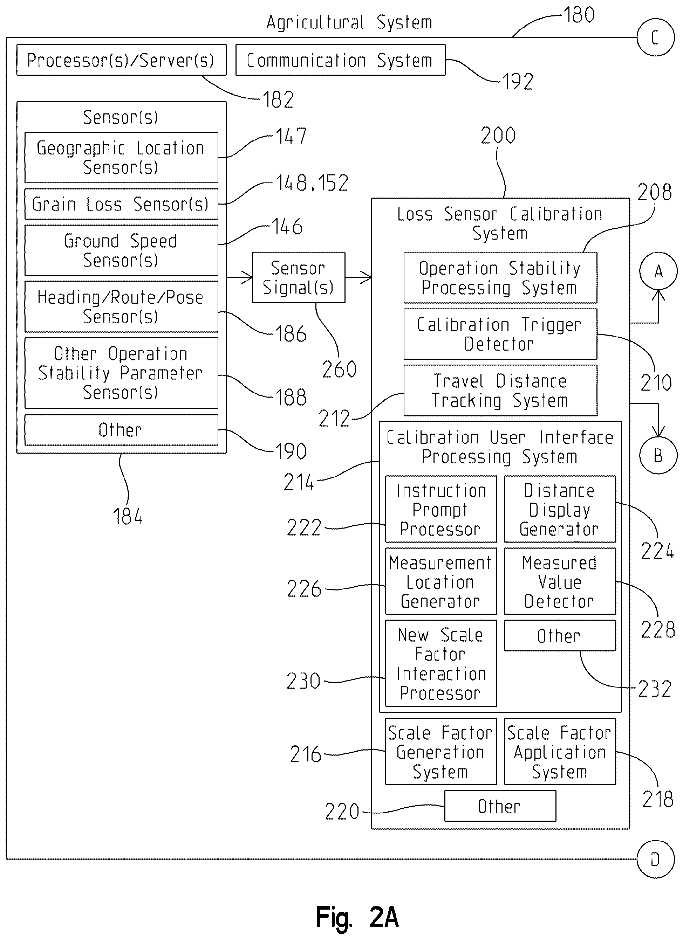

Returning to Figs. 1 and 2 of the present disclosure, loss sensors 152 illustratively provide an output signal indicative of the quantity of grain loss occurring in both the right and left sides of the clean crop routing assembly 28. In some examples, sensors 152 are strike sensors which count grain strikes per unit of time or per unit of distance traveled to provide an indication of the grain loss occurring at the clean crop routing assembly 28. The strike sensors for the right and left sides of the clean crop routing assembly 28 may provide individual signals or a combined or aggregated signal. In some examples, sensors 152 may include a single sensor as opposed to separate sensors provided for each clean crop routing assembly 28.

Separator loss sensor 148 provides a signal indicative of grain loss in the left and right separators, not separately shown in Fig. 1. The separator loss sensors 148 may be associated with the left and right separators and may provide separate grain loss signals or a combined or aggregate signal. In some instances, sensing grain loss in the separators may also be performed using a wide variety of different types of sensors as well.

Agricultural machine 10 may also include other sensors and measurement mechanisms. For instance, agricultural machine 10 may include one or more of the following sensors: a header height sensor that senses a height of cutting head 18 above ground; mechanical stability sensors that sense oscillation or bouncing motion (and amplitude) of agricultural machine 10; a residue setting sensor that is configured to sense whether agricultural machine 10 is configured to chop the residue, produce a windrow, etc.; a cleaning shoe fan speed sensor to sense the speed of fan or blower 46; a concave clearance sensor that senses clearance between the threshing rotor 36 and concaves; a threshing rotor speed sensor that senses a rotor speed of threshing rotor 36; a chaffer clearance sensor that senses the size of openings in chaffer 48; a sieve clearance sensor that senses the size of openings in sieve 50; a material other than grain (MOG) moisture sensor that senses a moisture level of the MOG passing through agricultural machine 10; one or more machine setting sensors configured to sense various configurable settings of agricultural machine 10; a machine orientation sensor that senses the orientation of agricultural machine 10; and crop property sensors that sense a variety of different types of crop properties, such as crop type, crop moisture, and other crop properties. Crop property sensors may also be configured to sense characteristics of the severed crop material as the crop material is being processed by agricultural machine 10. For example, in some instances, the crop property sensors may sense grain quality such as broken grain, MOG levels, grain constituents such as starches and protein, and grain feed rate as the grain travels through the feeder house or slope conveyor 20, clean grain elevator or conveyor 32, or elsewhere in the agricultural machine 10. The crop property sensors may also sense the feed rate of biomass through feeder house or slope conveyor 20, through the separating section 44 or elsewhere in agricultural machine 10. The crop property sensors may also sense the feed rate as a mass flow rate of grain through elevator or conveyor 32 or through other portions of the agricultural machine 10 or provide other output signals indicative of other sensed variables.

In Figs. 2A-B of the present disclosure, one example of an agricultural system 180 is shown in a block diagram in which some or all items illustrated in Fig. 1 on machine 10 may be included. It will be noted that, in one example, agricultural system 180 is entirely disposed on machine 10. In another example, items in agricultural system 180 may be dispersed among machine 10 and other machines or other systems. Agricultural system 180 is shown in Figs. 2A-B as a single system, disposed on the agricultural machine 10, for the sake of example only.

In the example shown in Figs. 2A-B, agricultural system 180 includes one or more processors or servers 182, sensors 184 (which can include yield sensor 102, forward camera sensor 104, rear camera sensor 106, geographic location sensor 147, grain loss sensors 148, 152, ground speed sensor 146, heading/route/pose sensor 186, other operation stability parameter sensors 188, and other sensors 190). Agricultural system 180 also includes communication system 192, data store 194 (which can include one or more scale factors 196 and other items 198), loss sensor calibration system 200, control system 202, controllable subsystems 204, and other items 206. Loss sensor calibration system 200 can include operation stability processing system 208, calibration trigger detector 210, travel distance tracking system 212, calibration user interface processing system 214, scale factor generation system 216, scale factor application system 218, and other items 220. Calibration user interface processing system 214 can include instruction prompt processor 222, distance display generator 224, measurement location generator 226, measured value detector 228, new scale factor interaction processor 230, and other items 232. Control system 202 can include data store controller 234, communication system controller 236, machine settings controller 238, operator interface controller 240, and other items 242. Controllable subsystems 204 can include machine setting subsystem(s) 244, operator interface subsystem 246, and other items 248.

Figs. 2A-B also show that an operator 250 can interact with agricultural system 180 through operator interfaces 252 that can be generated by operator interface subsystem 246 or a mobile device 254, or in other ways. Operator 250 can also interact with agricultural system 180 through other operator interface mechanisms in operator interface subsystem 246. Such mechanisms can include things as levers, joysticks, a steering wheel, pedals, a display screen, a touch sensitive display screen, actuatable user input mechanisms that can be displayed on a display screen (such as links, button, icons, etc.) which can be actuated using a point and click device or touch gesture or speech inputs. The operator interface mechanisms can include a wide variety of other audio, visual, or haptic mechanisms that provide outputs to operator 250 and other mechanisms that receive inputs from operator 250.

Heading/route/pose sensors 186 can sense the heading/route/pose of machine 10 or can generate such information or derive such information from other sensor signals. For instance, sensors 186 can receive multiple successive outputs from geographic location sensors 147 and identify the heading, route, and possible speed, as well as the pose of machine 10. Sensors 186 can include inertial measurement units, gyroscopic sensors, accelerometers, etc.

Other operation stability parameter sensors 188 sense other parameters (in addition to or instead of those sensed by other sensors) that indicate the operational stability of agricultural machine 10. For instance, the operational stability is indicative of whether agricultural machine 10 is operating in conditions under which the signals generated by grain loss sensors 148, 152 are more likely to reflect the grain loss than other conditions. By way of example, when machine 10 makes a headland turn and is reengaging the crop to be harvested, this is an unstable condition in which machine 10 may be accelerating, in which only part of the cutting head 18 of machine 10 may be fully engaged with crop, etc. Under these conditions, the sensor signals generated by grain loss sensors 148 and 152 may be less accurate than under more stable conditions, such as after machine 10 has fully engaged the crop after a headland turn and is traveling at a near constant speed. Also, other stability parameters may indicate the mass flow rate of harvested material through machine 10, the ground speed of machine 10, the pose of machine 10 (such as whether machine 10 is on a side hill, an incline or decline, or in a different pose that may affect the accuracy of the grain loss sensor signals generated by grain loss sensors 148, 152), whether the cutting head 18 of the machine 10 is bouncing (e.g., having just gone over a rut), or any of a wide variety of other parameters that may reflect on the operational stability of machine 10. Sensors 184 generate sensor signals 260 which may be provided to loss sensor calibration system 200 and/or other items in agricultural system 180.

Communication system 192 can facilitate communication of the items in agricultural system 180 with one another, and with external systems, other machines, etc. Therefore, communication system 192 can include a controller area network (CAN) bus and bus controller, and other network communication functionality that may vary, based upon the type of network communication that system 192 communicates over. For instance, communication system 192 can include a wide area network communication system, a local area network communication system, a Bluetooth communication system, a Wi-Fi communication system, a near field communication system, a cellular communication system, or any other of a wide variety of different communication systems or combinations of communication systems.

Operation stability processing system 208 receives sensor signals 260 from sensors 184 and determines whether the agricultural machine 10 is operating with sufficient stability that a sensor calibration operation can be performed. By way of example, sensor signals 260 that represent operational stability can be compared to threshold values, aggregated, applied to a classifier, or otherwise processed to define whether agricultural machine 10 is operating with sufficient stability so that a loss sensor calibration operation can be performed. If so, a stability indicator is output on an operator interface 252 for operator 250.

The operator 250 can then manually actuate an input mechanism that is detected by calibration trigger detector 210, indicating that a loss sensor calibration operation should be performed. In the agricultural system 180 of Figs. 2A-B, travel distance tracking system 212 receives the sensor signals 260 indicative of the geographic position of agricultural machine 10 to track the distance that agricultural machine 10 travels before it is stopped. In some implementations, distance will be used to prompt the operator 250 where to take a manual loss measurement.

Calibration user interface processing system 214 generates an output indicative of a user interface that can be displayed as one of operator interfaces 252 to operator 250. Instruction prompt processor 222 provides instructions prompting operator 250 to perform different operations. Distance display generator 224 displays a distance that machine 10 has traveled and measurement location generator 226 generates an output indicative of a location where operator 250 is to perform one or more manual loss measurements in accordance with the system 180 of Fig. 2. Measured value detector 228 generates an actuator that can be actuated by operator 250 to enter the measured loss value(s) that were manually measured by operator 250. Scale factor generator system 216 then generates a scale factor based on the manually entered measured loss values and the current sensor signal from the grain loss sensors 148, 152 generated at or near the locations where the loss is measured.

The new scale factor can be displayed for operator 250 using new scale factor interaction processor 230. The new scale factor can be accepted, edited, or dismissed by operator. The operator interactions are detected by new scale factor interaction processor 230 to generate an output to scale factor application system 218 and control system 202. Scale factor application system 218 can then apply the new scale factor (if it is accepted by operator 250), or the edited scale factor (if it is edited by operator 250), or the previously stored scaled factor 196 (if the new scale factor is dismissed or cancelled by operator 250) to the sensor signal (or values indicated by the sensor signal) provided by grain loss sensors 148, 152. Applying the scale factor to the sensor signal (or values represented by the sensor signal) generates a scaled sensor signal (also referred to as the scaled loss sensor signal value) 258 which can be provided, along with the new scale factor 256, to control system 202.

Control system 202 can generate control signals 268 based upon the scale factor 256 and the scaled sensor signal 258. For instance, data store controller 234 can generate control signals 268 to control data store 194 to store the new scale factor 256. Communication system controller 236 can generate control signals 268 to control communication system 192 to communicate the new scale factor 256 (and possibly scaled sensor signals 258) to mobile device 254, to other systems, to other machines, etc. Machine settings controller 238 can generate control signals 268 to control machine setting subsystems 244 to modify or control machine settings based on the scale factor 256 and/or the scaled sensor signals 258. Operator interface controller 240 can generate control signals 268 to control operator interface subsystem 246 to generate operator interfaces 252 based on the new scale factor 256, the scaled sensor signals 258, etc.

Conventional grain loss sensing is often ineffective or unsatisfactory to machine operators and customers. While other issues may exist, conventional grain loss monitoring systems can be ineffective in some instances or inaccurate. For example, many conventional grain loss monitoring systems only perform a calibration process at a single point. In other words, these conventional grain loss monitoring systems do not take into account variances that comes from changes in loss levels, material flow, machine speed, etc. Moreover, conventional grain loss monitoring systems do not accurately detect grain loss and measure grain loss on the ground at the same location, and thus inaccuracies are present in these conventional grain loss monitoring systems.

For example, during a conventional calibration process of a conventional grain loss monitoring system, the conventional calibration process is often executed in a field at a single point or location in a field. In this process, an operator may scan the field behind the machine and at a time in which the operator believes the grain loss is at an appropriate or satisfactory amount, the operator initiates the calibration process by triggering a calibration. Here, one or more loss sensors on the machine detects grain loss at the separator and/or cleaning subsystem. The operator subsequently stops the machine, exits the machine and performs a ground truthing process by inspecting an area behind or rearward of the machine to determine if the amount of grain loss on the ground is satisfactory. If the operator determines the amount of grain loss on the ground rearward of the machine is satisfactory, then the operator concludes the grain loss monitoring system is satisfactory. If, however, the operator determines the amount of grain loss on the ground is unsatisfactory, then the operator makes an adjustment on the machine and repeats the calibration process. Once the operator determines the grain loss on the ground is satisfactory, the machine performs a harvesting operation without performing any additional calibration process.

A problem that arises with the conventional calibration process is that satisfactory grain loss may be subjective based solely on what the operator is willing to accept. Another problem is that the conventional calibration process is executed at only a single point or location. This often ignores changes in the machine, the field, crop type, crop variety, etc. In other words, with conditions varying with the machine and in the field during a harvesting operation, the conventional calibration process does not consider varying conditions.

In the present disclosure, one or more implementations provide improved grain loss monitoring accuracy across varying conditions by creating different loss conditions during a calibration process. In some implementations, the calibration process is executed manually by an operator or third party, and in other instances the calibration process may be executed by a control system 202 automatically through software algorithms. In further implementations, a software algorithm may send commands via an operator interface 252 to the operator 250 for performing the calibration process and making adjustments to the machine 10 to improve calibration accuracy and reduce grain loss. In yet further implementations, the control system 202 or loss sensor calibration system 200 may make adjustments to the machine 10 to alter the performance of the machine and/or perform the calibration process at different conditions. This may be referred to in this disclosure as a multi-point calibration process.

Before further describing the multi-process calibration process , one feature of the present disclosure is the performance of a grain loss measurement on the ground or in the field. This process sometimes is referred to as "ground truthing" or a "ground truth process." In a grain loss monitoring system, one or more grain loss sensors 148, 152 may detect how may seeds or grain contacts a respective sensor. Sensor signals 260 may be received by the loss sensor calibration system 200 or control system 202 and communicate the signals 260 to an operator interface 252 or mobile device 254, for example. Even with this information from the grain loss sensors 148, 152, it is not always known how much grain is actually being lost from the agricultural machine 10 during the harvesting operation. During ground truthing or a ground truth process, an operator may stop the agricultural machine 10 during the harvesting process to perform a grain loss measurement on the ground behind or outside of the machine 10. The grain loss measurement may include the operator 250 exiting the agricultural machine 10, inspecting the ground outside of the machine 10, and counting a number of kernels in a predefined or predetermined area. Based on the number of kernels in that area, a grain loss percentage may be computed. For example, in one non-limiting implementation, an operator 250 marks off a 1 square-foot area outside of the machine 10, counts the number of kernels in that area, and then computes the grain loss percentage based on the number of kernels.

In another implementation, a loss pan may be used to count lost grain. A loss pan is a physical pan that may be coupled to the agricultural machine 10 and released therefrom or otherwise thrown or dropped from the agricultural machine 10 by an operator 250 during the harvesting operation. The loss pan may be released in the field such that the agricultural machine 10 performs the harvesting operation over the loss pan which then collects lost grain from the agricultural machine 10. The operator then stops the agricultural machine, exits from the machine, and counts the kernels on the loss pan. Alternatively, the operator or a third party may clean the grain loss on the pan, use a scale to perform a measurement, and then provide the amount of grain loss collected by the loss pan to a display on an operator interface 252 or mobile device 254. The grain loss is then calibrated based on the amount of grain loss collected by the loss pan and entered into the grain loss calibration system 200. In yet another implementation, the grain loss measurement may be used by the operator or grain loss calibration system 200 to compare the grain loss measurement to the sensor signals 260 from the grain loss sensors 148, 152. Thus, ground truthing is a process that may be used for comparing the sensor signals 260 from the grain loss sensors 148, 152 to the actual visual inspection of grain lost on the ground outside of the machine 10 during the harvesting operation.

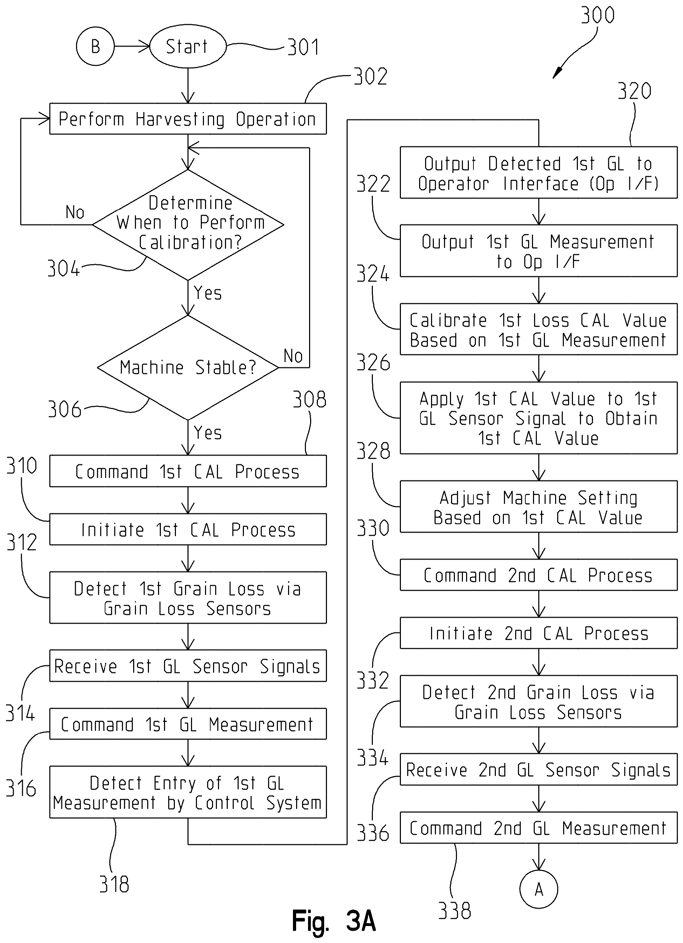

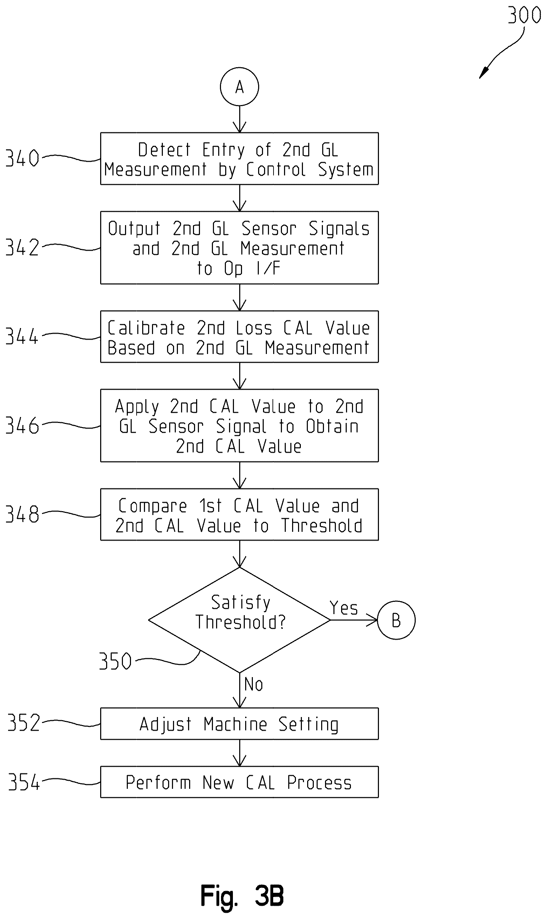

Referring to Fig. 3 of the present disclosure, one implementation of a method 300 for performing a multi-point grain loss calibration is shown. The method 300 is shown including a plurality of blocks that may be executed by one or more of the processor 182, the communication system 192, the data store 194, the loss sensor calibration system 200, the control system 202, the controllable subsystem 204, the operator 250, the operator interface 252, the mobile device 254, another device or system otherwise shown in Figs. 2A-B of the agricultural system 180, or another device, system or third party not shown in Figs. 2A-B. Moreover, the plurality of blocks of method 300 may be executed in any order. Thus, the order of the plurality of blocks in Figs. 3A-B is only shown as a single implementation of the method 300, and other implementations of the method 300 may include fewer blocks, more blocks, and/or the plurality of blocks arranged in an order different from that of Figs. 3A-B. In other words, the method 300 of Figs. 3A-B is only one implementation of a plurality of implementations contemplated by the present disclosure and is not intended to limit the scope of the disclosure.

Referring to Fig. 3A, the method 300 begins at a first start block 301 and advances to block 302 where an agricultural machine 10 such as the one depicted in Fig. 1 performs a harvesting operation. During the harvesting operation, a decision is made in block 304 whether to perform a calibration of the grain loss monitoring system. In some implementations, block 304 is executed by the operator 250. In other implementations, block 304 is executed automatically via a software algorithm executed by the processor 182 or control system 202. As previously described, one of the limitations with conventional calibration methods is the calibration is executed at a single point or location in a field without considering variances in machine settings, ground conditions, crop type and/or variety, etc. In block 304, the decision to perform calibration may be based on different criteria such as time, crop type, crop variety, moisture, ambient conditions, and loss value outside of expected range. When considering time, this may be how many days have passed since the last calibration. There may be a threshold set to calibrate the grain loss monitoring system every so many days or hours of operation. In some implementations, a message may be triggered and displayed on the operator interface 252 to command the operator 250 to perform calibration. In other implementations, the control system 202 may determine it is necessary to perform calibration in block 304. In yet other implementations, a third party may communicate via a mobile device 254 to the operator 250 or control system 202 to perform calibration. In several implementations, the time between calibration may be one or more hours of operation. In other implementations, the time between calibration may be one or more days. Although not shown in Fig. 2, a clock or timer may be used for calculating number of hours or days between calibrations. In some implementations, the operator interface 252 may include a display that shows the time between calibrations.

With respect to crop type, a field may include two or more different types of crops planted. For example, if a field includes wheat and canola, the grain loss monitoring system may need to be calibrated as the machine 10 moves from harvesting wheat to canola or vice versa. In one implementation, an as-planted map may be displayed via the operator interface 252 to show where the transition from one crop type to another crop type occurs in a field. The operator 250 can initiate the calibration or the control system 202 can communicate to the operator 250 to perform calibration as the machine 10 traverses from one crop to another crop. Moreover, the operator 250 or control system 202 may perform one calibration in the field planted with wheat, for example, and another calibration in the field planted with canola. This multi-point calibration can improve the accuracy of grain loss monitoring over conventional calibration methods and systems.

Similar to crop type, a field may include two or more different varieties of crop planted. For example, if a field includes two different varieties of corn, there may be different grain loss based on the different corn varieties. Thus, to compensate for the different varieties of crop planted in a field, the grain loss monitoring system may be calibrated as the machine 10 moves in the field from one area planted with a first crop variety to another area planted with a different crop variety. In one implementation, an as-planted map may be displayed via the operator interface 252 to show where the transition from one crop variety to another crop variety occurs in a field. The operator 250 can initiate the calibration or the control system 202 can communicate to the operator 250 to perform calibration as the machine 10 traverses from one crop variety to another crop variety. Moreover, the operator 250 or control system 202 may perform one calibration in the field planted with a first crop variety and another calibration in the field planted with a second crop variety.

With respect to moisture, a moisture sensor may be able to detect grain moisture as the grain passes through the machine 10 during the harvesting operation. When grain moisture changes by a predefined amount, the operator may initiate a new calibration or a calibration may be automatically initiated, for example, by the control system 202.

When considering ambient conditions, calibration may be performed based on a decision made in block 304 based on relative humidity and temperature changes. For example, when the dew sets in at night or dries off during the day may be one factor when determining whether to perform calibration in block 304. Moreover, changes in temperature may also trigger a determination in block 304 to perform calibration.

In block 304, it may also be determined to perform calibration when a grain loss value is detected by the grain loss sensors 148, 152 or a grain loss measurement is outside of a threshold range or expected range of grain loss. In some implementations, the threshold range may be predetermined or predefined. In other implementations, an operator may set the threshold or expected range of grain loss. In any event, if it is determined that grain loss is outside the threshold range, the operator 250 or control system 202 may determine in block 304 to perform calibration.

Returning to method 300, if it is determined in block 304 that calibration does not need to be performed, then method 300 returns to block 302 and the machine 10 continues the harvesting operation without performing calibration. If, however, in block 304 it is determined that one or more criteria is met for performing calibration, then method 300 advances to block 306 where a determination is made whether the machine 10 is operating at a stable condition. Several examples of criteria that may be considered in block 306 include clean grain mass flow, tailings volume sensors, ground speed, engine power, rotor drive pressure or power, and predictions of crop in front of the machine 10. It can be desirable to calibrate the grain loss monitoring system under stable conditions to more accurately match the sensed grain loss via the grain loss sensors 148, 152 to the measured grain loss via a ground truth process. Each of the aforementioned criteria may include a tolerance band or threshold range in which values for each may be compared to in block 306.

In one implementation, the yield sensor 102 on the machine 10 detects a clean grain mass flow. The control system 202 or processor 182 may receive a sensor signal 260 from the yield sensor 102 and compare the sensor signal 260 to a clean grain mass flow tolerance band or threshold range. If the clean grain mass flow sensed by the yield sensor 102 satisfies or falls within the clean grain mass flow tolerance band or threshold range, a determination in block 306 is made that this criteria of the machine 10 is operating in a stable condition. If not, a determination in block 306 is made that the criteria of the machine 10 is not operating in a stable condition and the method 300 returns to block 304.

In another implementation, the tailings volume sensor 128 on the machine 10 detects a tailings volume or amount as described above. The control system 202 or processor 182 may receive a sensor signal 260 from the tailings volume sensor 128 and compare the sensor signal 260 to a tailings volume tolerance band or threshold range. If the tailings volume sensed by the tailings volume sensor 128 satisfies or falls within the tailings volume tolerance band or threshold range, a determination in block 306 is made that this criteria of the machine 10 is operating in a stable condition. If not, a determination in block 306 is made that the criteria of the machine 10 is not operating in a stable condition and the method 300 returns to block 304.

In a further implementation, ground speed may be an additional criteria considered when evaluating whether stable conditions are present in block 306. Ground speed may refer to the machine speed or speed of the machine 10. A ground speed sensor 146 may detect ground speed and communicate the ground speed via a sensor signal 260. The control system 202 or processor 182 may receive a sensor signal 260 from the ground speed sensor 146 and compare the sensor signal 260 to a ground speed tolerance band or threshold range. If the ground speed sensed by the ground speed sensor 146 satisfies or falls within the ground speed tolerance band or threshold range, a determination in block 306 is made that this criteria of the machine 10 is operating in a stable condition. If not, a determination in block 306 is made that the criteria of the machine 10 is not operating in a stable condition and the method 300 returns to block 304.

A further consideration in block 306 is engine power. Engine power may be detected by a load sensor or other means. Engine power may be sensed and communicated via a sensor signal 260. The control system 202 or processor 182 may receive a sensor signal 260 indicative of engine power and compare the sensor signal 260 to an engine power tolerance band or threshold range. If the detected engine power satisfies or falls within the engine power tolerance band or threshold range, a determination in block 306 is made that this criteria of the machine 10 is operating in a stable condition.

Another consideration in block 306 is rotor drive pressure or power. In some implementations, a hydraulic pressure sensor may be disposed on the rotor variable speed belt drive to sense power. The sensed power may be communicated as a sensor signal 260, and the control system 202 or processor 182 may receive the sensor signal 260 indicative of rotor drive pressure or power and compare the sensor signal 260 to a rotor drive pressure or power tolerance band or threshold range. If the detected rotor drive pressure or power satisfies or falls within the rotor drive pressure or power tolerance band or threshold range, a determination in block 306 is made that this criteria of the machine 10 is operating in a stable condition. If not,

In yet another implementation, block 306 may consider or predict crop in front of the machine 10 through satellite imagery via GPS or crop height from forward-looking cameras 104. Here, an evaluation is made of the location of the machine 10 in a field relative to crop remaining to be harvested at a location in front of the machine 10. If the machine 10 has just begun harvesting, a determination may be made in block 306 that a stable condition has not yet been satisfied. Alternatively, if the machine 10 has been harvesting for a period of time and the machine 10 is expected to continue harvesting based on the location of the machine 10 in the field, a determination may be made in block 306 that a stable condition is satisfied. Likewise, if the forward-looking camera 104 detects a change in height of crop, a determination may be made that a stable condition is not satisfied, e.g., the machine 10 is about to enter a different area of the field.

Alternatively, if the forward-looking camera 104 detects the crop in front of the machine 10 is relatively consistent, i.e., a change in crop height satisfies a threshold indicative of low or small change in crop height, then a determination in block 306 may indicate a stable condition.

Other criteria may also be used for determining a stable condition. If, in block 306, a determination is made that a stable condition is not satisfied or met, then the method 300 returns to either block 302 or block 304. If a determination is made that a stable condition is met, then the method 300 advances to block 308.

In block 308, a command may be communicated to an operator 250 to initiate a first calibration process. In some implementations, the command may be sent via the instruction prompt processor 222. The command may be communicated to an operator interface 252, display, mobile device 254 or another way. In other implementations where the calibration process is executed automatically via a software algorithm, block 308 may be executed automatically with or without notifying the operator 250.

Once a command has been communicated in block 308, the method 300 advances to block 310 where an operator 250 initiates the first calibration process. To do so, the operator interface 252 may include a touchscreen button, a button, switch, lever, or other operator control to trigger the first calibration process. In an automated process, block 310 may be executed by the control system 202 or processor 182 to initiate the first calibration process.

Method 300 advances to block 312 where a first grain loss detection is made via the grain loss sensors 148, 152. The first grain loss sensor 148 detects grain loss at the separator or separating section 44, and the second grain loss sensor 152 detects grain loss at the cleaning shoe or clean crop routing assembly 28. The first and second grain loss sensors 148, 152 communicate the detected grain loss at each location via sensor signals 260 in block 312. The sensor signals 260 are received in block 314 by the loss sensor calibration system 200, the control system 202 or both. In some implementations, the grain loss detected by both grain loss sensors 148, 152 may be displayed via the operator interface 252 (e.g., on a display in a cab of the machine 10). As will be described below, the grain loss displayed for the operator 250 may be a total loss value in some implementations. In other implementations, the grain loss may be separated between the grain loss detected by the first grain loss sensor 148 and the grain loss detected by the second grain loss sensor 152.

As the grain loss sensors detect grain loss in block 312 and communicate the sensor signals 260 in block 314, the method 300 advances to block 316 where a command is sent to perform a first grain loss measurement or ground truth process. The processor 182, for example, may be executing a software algorithm and send an instruction or command to an operator interface 252 to communicate to the operator 250 to perform the first grain loss measurement. In block 316, an operator 250 may stop the machine 10 from performing the harvesting operation, exit the machine 10 and execute a ground truth process at a location outside of the machine 10. As described above, the operator 250 may identify a defined area to inspect kernels on the ground. Alternatively, a loss pan may have been released during the harvesting operation to collect grain loss, and in block 316 the operator 250 or a third party may inspect the loss pan. In any event, an input of a value corresponding to the grain loss inspected via the ground truth process may be provided to the control system 202 via the operator interface 252. In turn, in block 318 the control system 202 or processor 182 may detect and receive the entry of the first grain loss measurement.

In block 320, the control system 202 or processor 182 may output to a display of the operator interface 252 the first grain loss detection by the grain loss sensors 148, 152 so that an operator 250 may know the detected grain losses via the grain loss sensors 148, 152. In some implementations, the first grain loss displayed on the operator interface 252 may be a total loss. In other implementations, the first grain loss displayed on the operator interface 252 may be separated between the grain loss detected by the first grain loss sensor 148 and the grain loss detected by the second grain loss sensor 152. In at least one implementation, the first grain loss may be displayed as a total loss and separated between the grain loss detected by the first grain loss sensor 148 and the grain loss detected by the second grain loss sensor 152.

In block 322, the first grain loss measurement received in block 318 may be displayed on the operator interface 252. In some implementations, the first grain loss measurement may be displayed as the total number of kernels counted by the operator 250. In another implementation, the first grain loss measurement may be processed and a first grain loss calibration value may be determined (e.g., calculated) based on the first grain loss measurement in block 324. The first grain loss calibration value may be displayed on a display of the operator interface 252 in block 322.

Method 300 advances to block 326 where the processor 182 or control system 202 applies the first loss calibration value to the first grain loss sensor signal 260 to obtain a first calibration value. In one example, the first grain loss sensor signal 260 may be representative of a total loss (e.g., sum of losses detected by the grain loss sensors 148, 152). In some implementations, the first calibration value may be communicated to the loss sensor calibration system 200 for further processing.

Once the first calibration process is completed in block 326 and the first calibration value is obtained, method 300 advances to block 328 where an operator 250 may be instructed to adjust a machine setting based on the first calibration value. In some implementations, the instruction provided in block 328 may include an instruction to adjust machine speed or some other machine setting to affect grain loss from the machine 10. In other implementations, the processor 182 or control system 202 may automatically adjust a machine setting or speed to affect the grain loss during calibration.

In one implementation, the machine or ground speed may be adjusted in block 328 based on the first calibration value. Machine or ground speed is one parameter that corresponds with feed rate, i.e., the rate at which material (e.g., crop, material other than grain ("MOG")) moves through the machine during the harvesting operation. Feed rate may be affected by ground or machine speed as well as crop type. In some aspects, the mass of MOG can vary independently of the mass of the grain passing through the machine. As the machine speed is increased, the feed rate increases. As machine speed is decreased, the feed rate decreases. Moreover, as feed rate increases, grain loss may also increase. However, in at least one implementation, the relationship between feed rate and grain loss is non-linear and therefore adjustments in feed rate is not a 1:1 adjustment to grain loss. Nevertheless, an adjustment to machine speed can affect both the feed rate and grain loss.

In one example, the first calibration value obtained in block 326 may correspond to a higher machine speed and thus a higher feed rate. In block 328, the method 300 may prompt the operator 250 of the machine 10 to operate the machine at a lower machine speed thus producing a lower feed rate. The operator 250 may reduce machine speed in block 328. As machine speed is reduced, method 300 advances to block 330 to perform a second calibration process. A command to recalibrate the grain loss monitoring system may be communicated to the operator in block 330, or the control system 202 may initiate the second calibration process in block 332. Alternatively, the operator 250 may initiate the second calibration process in block 332. To do so, the operator interface 252 may include a touchscreen button, a button, switch, lever, or other operator control to trigger the second calibration process in the same way the operator initiated the first calibration process in block 310. In some implementations, method 300 returns to block 306 to determine if the stable conditions are present. In other implementations, method 300 advances to block 334 where the first and second grain loss sensors 148, 152 detect grain loss.

As described above, the first grain loss sensor 148 detects grain loss at the separator or separating section 44, and the second grain loss sensor 152 detects grain loss at the cleaning shoe or clean crop routing assembly 28. The first and second grain loss sensors 148, 152 communicate the second detected grain loss at each location via sensor signals 260 in block 336. The sensor signals 260 are received in block 336 by the loss sensor calibration system 200, the control system 202 or both. In some implementations, the grain loss detected by both grain loss sensors 148, 152 may be displayed via the operator interface 252 (e.g., on a display in a cab of the machine 10). The grain loss displayed for the operator 250 may be a total loss value in some implementations, whereas in other implementations, the grain loss may be separated between the grain loss detected by the first grain loss sensor 148 and the grain loss detected by the second grain loss sensor 152.

As the grain loss sensors detect grain loss in block 334, the method 300 advances to block 338 where a command is sent to perform a second grain loss measurement or ground truth process. The processor 182, for example, may be executing a software algorithm and send an instruction or command to an operator interface 252 to communicate to the operator 250 to perform the second grain loss measurement. In block 338, an operator 250 may stop the machine 10 from performing the harvesting operation, exit the machine 10 and execute the ground truth process at a location outside of the machine 10. As described above, the operator 250 may identify a defined area to inspect kernels on the ground. Alternatively, a loss pan may have been released during the harvesting operation to collect grain loss, and in block 338 the operator 250 or a third party may inspect the loss pan. In any event, an input of a value corresponding to the grain loss inspected via the ground truth process may be provided to the control system 202 via the operator interface 252. In turn, in block 340, the control system 202 or processor 182 may detect the entry of the second grain loss measurement.

In block 342, the control system 202 or processor 182 may output to a display of the operator interface 252 the second grain loss detection by the grain loss sensors 148, 152 so that an operator 250 may know the second detected grain losses. In some implementations, the SGLD may be communicated to a mobile device 254. In some implementations, the second grain loss displayed on the operator interface 252 may be a total loss. In other implementations, the second grain loss displayed on the operator interface 252 may be separated between the grain loss detected by the first grain loss sensor 148 and the grain loss detected by the second grain loss sensor 152. In at least one implementation, the second grain loss may be displayed as a total loss and separated between the grain loss detected by the first grain loss sensor 148 and the grain loss detected by the second grain loss sensor 152. The total loss may be a sum of the grain loss detected by both grain loss sensors 148, 152.

In block 342, the second grain loss measurement received in block 340 may also be displayed on the operator interface 252. In some implementations, the second grain loss measurement may be displayed as the total number of kernels counted by the operator 250. In another implementation, the second grain loss measurement may be processed and a second grain loss calibration value may be computed based on the second grain loss measurement in block 344. The second grain loss calibration value may be displayed on a display of the operator interface 252 in block 342.

Method 300 advances to block 346 where the processor 182 or control system 202 applies the second loss calibration value to the second grain loss sensor signal 260 to obtain a second calibration value. In some implementations, the second calibration value may be communicated to the loss sensor calibration system 200 for further processing. In other implementations, the loss sensor calibration system 200 or control system 202 may perform a comparison in block 348 of the first calibration value determined in block 326 to the second calibration value determined in block 346. The loss sensor calibration system 200 or control system 202 may evaluate how the machine settings change executed in block 328 affected grain loss based on the comparison. In one implementation, the loss sensor calibration system 200 or control system 202 may compare the first calibration value and second calibration value to predefined or predetermined threshold values in block 348. If the first and second calibration values satisfy the threshold values in block 350, method 300 returns to block 301. If one or both of the first and second calibration values do not satisfy the threshold values in block 350, a machine setting or speed is adjusted in block 352. For example, machine speed may be adjusted to affect grain loss. Once the machine setting or speed is adjusted in block 352, a new calibration process, e.g., a third calibration process, may be executed in block 354 to obtain a new or third calibration value. Although not shown in Fig. 3, the present disclosure includes comparing the new or third calibration value to the first calibration value and second calibration value. Alternatively, the new or third calibration value may be compared to a threshold value similar to block 348.

In method 300, a software algorithm may be executed by the processor 182, control system 202, or loss sensor calibration system 200. Alternatively, one or more controllers or systems in the agricultural system 180 may execute the software algorithm to perform method 300. As described above, method 300 may be executed automatically by the processor 182, control system 202, or loss sensor calibration system 200. The method 300 may command the operator 250 to perform the ground truth process during each calibration process, or the method 300 may send commands to a third party to perform the ground truth process. In any event, method 300 may be executed to perform a multi-point calibration of the grain loss monitoring system.

The predefined thresholds may be stored in a lookup table of values or provided on a calibration threshold curve stored in a memory unit of the data store controller 234 or another memory unit. The processor or server 182 may store the lookup table or curve in some implementations. In other implementations, the thresholds may be stored elsewhere in the agricultural system 180. With a calibration threshold curve, the curve may be plotted as a function of grain loss and feed rate, machine speed, or some other machine setting. As machine setting or speed is adjusted, for example, in blocks 328 and 352, additional calibration values may be obtained, for example, in blocks 326 and 346. The calibration values may be compared to the calibration threshold curve to evaluate if the calibration values satisfy the threshold, for example, in block 350. The calibration threshold curve may include a curve along with a threshold range above and below the curve such that any calibration value that falls within the threshold range satisfies the threshold in block 350. In the implementation of a lookup table, each threshold value in the lookup table may include an acceptable range relative to the threshold value such that as long as the calibration value falls within the acceptable range the calibration value satisfies the threshold in block 350.

As described above, the calibration values may be affected by diverse conditions. Two such conditions described above include feed rate and machine speed. Other conditions may include varying field conditions where yield is either high or low, amount of crop in a field, as well as other variabilities in the field (e.g., different terrain, varying ground conditions). Machine settings such as fan or blower 46 speed (e.g., high speed, medium speed, low speed) can affect grain loss. Other conditions may include test weight and crop characteristic changes. For example, a field having more than one crop variety (e.g., corn) can impact grain loss. Any of the aforementioned conditions can affect grain loss as well as calibration values of the grain loss monitoring system. Method 300 may be performed in some implementations where a first calibration value is determined under one type of condition and at least a second calibration value is determined under a different type of condition. In some implementations, more than two calibration values may be obtained by performing method 300. In this way, the multi-point calibration process allows for more accurate calibration of the grain loss monitoring system and can account for different or varying conditions.

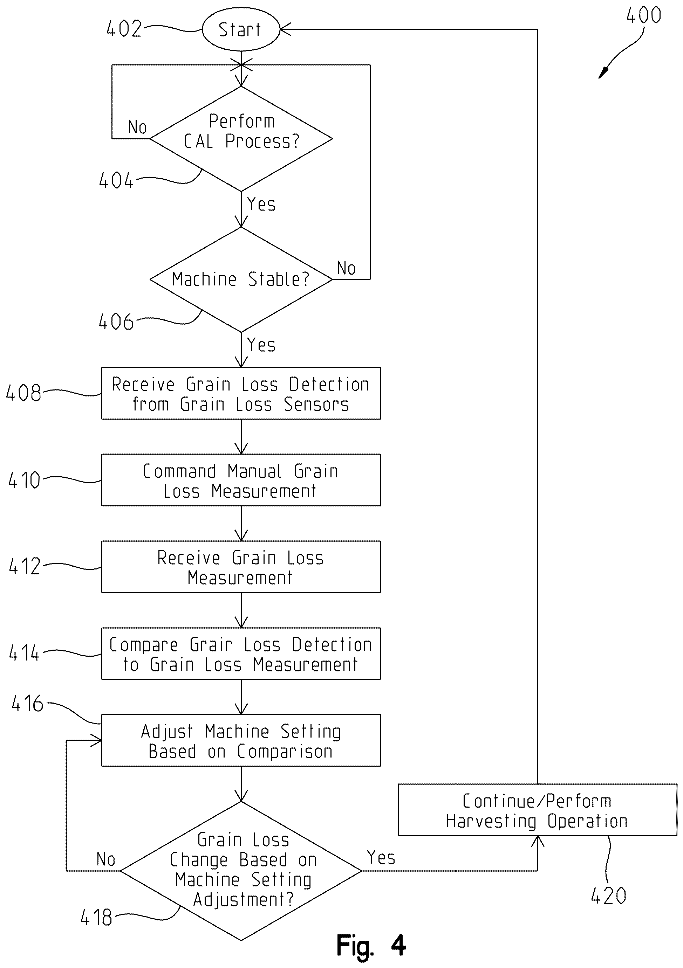

Referring to Fig. 4, one implementation of method 400 may be executed for evaluating if an adjustment to a machine setting or speed affects grain loss. The method 400 is shown including a plurality of blocks that may be executed by one or more of the processor 182, the communication system 192, the data store 194, the loss sensor calibration system 200, the control system 202, the controllable subsystem 204, the operator 250, the operator interface 252, the mobile device 254, another device or system otherwise shown in Fig. 2 of the agricultural system 180, or another device, system or third party not shown in Fig. 2. Moreover, the plurality of blocks of method 400 may be executed in any order. Thus, the order of the plurality of blocks in Fig. 4 is only shown as a single implementation of the method 400, and other implementations of the method 400 may include fewer blocks, more blocks, and/or the plurality of blocks arranged in an order different from that of Fig. 4. In other words, the method 400 of Fig. 4 is only one implementation of a plurality of implementations contemplated by the present disclosure and is not intended to limit the scope of the disclosure.

Referring to Fig. 4, method 400 begins at a first start block 402 and advances to block 404 where an agricultural machine 10 such as the one depicted in Fig. 1 performs a harvesting operation. During the harvesting operation, a decision is made in block 404 whether to perform a calibration of the grain loss monitoring system. In method 400, block 404 is executed automatically via a software algorithm executed by the processor 182 or control system 202. In block 404, the decision to perform calibration may be based on different criteria such as time, crop type, crop variety, moisture, ambient conditions, and loss value outside of expected range. Each criteria is described above with respect to block 304.

If it is determined in block 404 that calibration does not need to be performed, then method 400 returns to block 402 and the machine 10 continues the harvesting operation without performing calibration. If, however, in block 404 it is determined that one or more criteria is met for performing calibration, then method 400 advances to block 406 where a determination is made whether the machine 10 is operating at a stable condition. Several examples of criteria that may be considered in block 406 include clean grain mass flow, tailings volume sensors, ground speed, engine power, rotor drive pressure or power, and predictions of crop in front of the machine 10. In at least one implementation, the grain loss monitoring system is calibrated under stable conditions to more accurately match the sensed grain loss via the grain loss sensors 148, 152 to the measured grain loss via a ground truth process. Each of the aforementioned criteria may include a tolerance band or threshold range in which values for each may be compared to in block 406. Each criteria is described above with respect to block 306.

If it is determined in block 406 that stable conditions do not exist, then method 400 returns to block 404. If, however, it is determined in block 406 that stable conditions do exist, then method 400 advances to block 408. In block 408, the grain loss sensors 148, 152 detect grain loss and send sensor signals 260 indicative of the detected grain loss to the control system 202. Upon receiving the detected grain loss in block 408, a command or prompt may be sent to an operator interface 252 to instruct the operator 250 or to a mobile device 254 of a third party to perform a manual ground loss measurement via a ground truth process. In some implementations, the operator 250 may stop the machine 10 from harvesting, exit the machine, and perform an inspection of grain loss in an area outside of the machine 10. In other implementations, a loss pan may be released or dropped from the machine 10 to collect lost grain which is then inspected by the operator 250 or a third party. In several implementations, a third party is sent a communication to perform the inspection of the ground for grain loss as part of block 410. Once block 410 is performed, method 400 advances to block 412 where the control system 202 or processor 182 may receive the grain loss measurement taken in block 410.

In block 414, the grain loss detection from block 408 is compared to the grain loss measurement from block 412. From the comparison, a calibration value may be determined (e.g., computed) similar to that in blocks 326 and 346 of method 300. In another implementation, the comparison may be used to adjust a machine setting or speed in block 416. Here, for example, machine speed may be adjusted to affect both feed rate and grain loss. Other changes as described above may be performed in block 416. Once the machine setting or speed is adjusted in block 416, method 400 may advance to block 418 where grain loss is detected again by the grain loss sensors 148, 152 similar to that in block 408. A grain loss measurement may also be performed similar to that in blocks 410, 412. In any event, a determination may be made in block 418 whether the adjustment to the machine setting or speed in block 416 improved the grain loss. If a determination by the control system 202 that the grain loss is not improved in block 418, method 400 returns to block 416 and a different or additional adjustment is made to a machine setting or speed. If, however, the grain loss is improved based on the determination in block 418, then method 400 advances to block 420 and the machine 10 continues performing a harvesting operation. As the machine 10 performs the harvesting operation in block 420, method 400 returns to block 402 to repeat method 400.

In the aforementioned example of method 400, the method 400 is described as being executed automatically via the control system 202 or another system in the agricultural system 180. Method 400 may be part of a software algorithm, for example, or other executable logic. In other implementations, however, method 400 may be performed by the operator 250 in which instructions are communicated to the operator 250 to take actions in the different blocks of method 400.

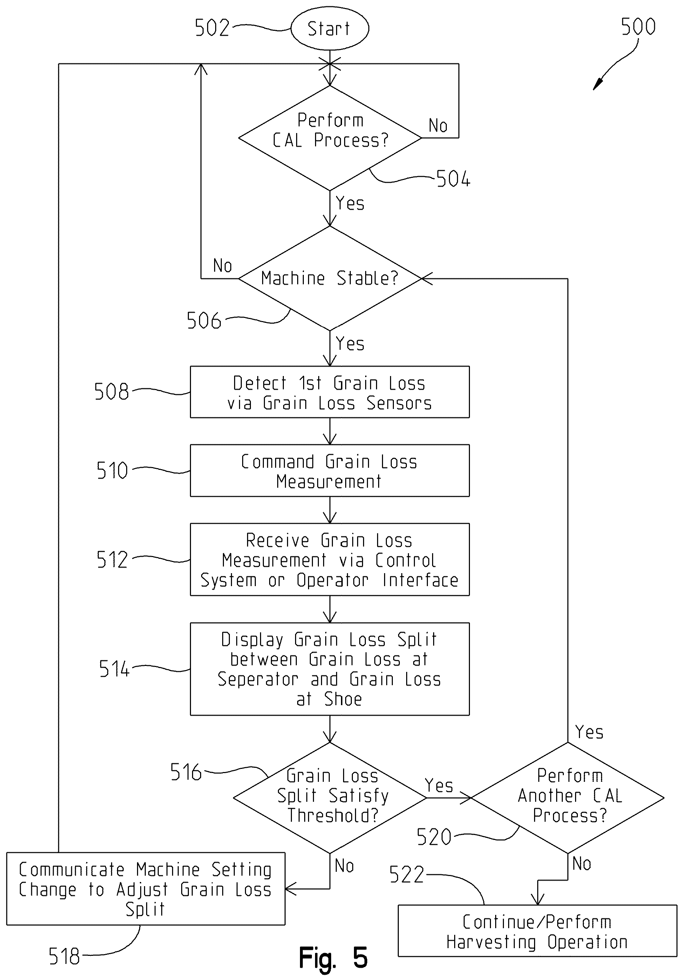

Referring to Fig. 5 of the present disclosure, another method 500 is executable either by an operator 250, automatically by the control system 202 or processor 182, or a combination thereof. Method 500 may be executed to adjust the loss detected by the first grain loss sensor 148 and the second grain loss sensor 152. As described above, the first grain loss sensor 148 detects grain loss at the separator or separating section 44, and the second grain loss sensor 152 detects grain loss at the cleaning shoe or clean crop routing assembly 28. In method 500, an adjustment to either the separator or the cleaning shoe can change or shift grain losses therebetween. In some implementations, an operator 250 may desire for there to be a balance between losses at the separator and the cleaning shoe.

In Fig. 5, method 500 is shown including a plurality of blocks that may be executed by one or more of the processor 182, the communication system 192, the data store 194, the loss sensor calibration system 200, the control system 202, the controllable subsystem 204, the operator 250, the operator interface 252, the mobile device 254, another device or system otherwise shown in Fig. 2 of the agricultural system 180, or another device, system or third party not shown in Fig. 2. Moreover, the plurality of blocks of method 500 may be executed in any order. Thus, the order of the plurality of blocks in Fig. 5 is only shown as a single implementation of the method 500, and other implementations of the method 500 may include fewer blocks, more blocks, and/or the plurality of blocks arranged in an order different from that of Fig. 5. In other words, the method 500 of Fig. 5 is only one implementation of several implementations contemplated by the present disclosure and is not intended to limit the scope of the disclosure.

Referring to Fig. 5, the method 500 begins at a first start block 502 and advances to block 504 where an agricultural machine 10 such as the one depicted in Fig. 1 performs a harvesting operation. During the harvesting operation, a decision is made in block 504 whether to perform a calibration of the grain loss monitoring system. In method 500, block 504 may be executed automatically via a software algorithm executed by the processor 182 or control system 202. In block 504, the decision to perform calibration may be based on different criteria such as time, crop type, crop variety, moisture, ambient conditions, and loss value outside of expected range. Each criteria is described above with respect to block 304.

If it is determined in block 504 that calibration does not need to be performed, then method 500 returns to block 502 and the machine 10 continues the harvesting operation without performing calibration. If, however, in block 504 it is determined that one or more criteria is met for performing calibration, then method 500 advances to block 506 where a determination is made whether the machine 10 is operating at a stable condition. Several examples of criteria that may be considered in block 506 include clean grain mass flow, tailings volume sensors, ground speed, engine power, rotor drive pressure or power, and predictions of crop in front of the machine 10. It can be desirable to calibrate the grain loss monitoring system when in stable conditions to more accurately match the sensed grain loss via the grain loss sensors 148, 152 to the measured grain loss via a ground truth process. Each of the aforementioned criteria may include a tolerance band or threshold range in which values for each of the criteria may be compared to the corresponding tolerance band or threshold range in block 506. Each criteria is described above with respect to block 306.

If it is determined in block 506 that stable conditions do not exist, then method 500 returns to block 504. If, however, it is determined in block 506 that stable conditions do exist, then method 500 advances to block 508. In block 508, the grain loss sensors 148, 152 detect grain loss and send sensor signals 260 indicative of the detected grain loss to the control system 202. Upon receiving the detected grain loss in block 508, a command or prompt may be sent to an operator interface 252 to instruct the operator 250 or a third party to perform a manual ground loss measurement via a ground truth process. In some implementations, the operator 250 may stop the machine 10 from harvesting, exit the machine, and perform an inspection of grain loss in an area outside of the machine 10. In other implementations, a loss pan may be released or dropped from the machine 10 to collect lost grain which is then inspected by the operator 250 or a third party. In several implementations, a third party is sent a communication to perform the inspection of the ground for grain loss as part of block 510. Once block 510 is performed, method 500 advances to block 512 where the control system 202 may receive the grain loss measurement taken in block 510.

In block 514, the operator interface 252 may include a display which shows the grain loss split between the grain loss detected by the first grain loss sensor 148 at the separator and the grain loss detected by the second grain loss sensor 152 at the cleaning shoe. This can be helpful to the operator 250 who otherwise is only able to determine total loss based on the ground truth process, and not where the grain losses are coming from. In many agricultural machines including a combine harvester, grain loss generally comes from the separator and the cleaning shoe. In this manner, an operator 250 may visually inspect where the most grain loss is originating from. In some implementations, the software algorithm executed by the processor 182 or control system 202 may compare a percentage or amount of grain loss at the separator to a first threshold amount and a percentage or amount of grain loss at the cleaning shoe to a second threshold amount. In other implementations, a ratio may be calculated based on the split in grain losses (e.g., grain loss at separator is X% and grain loss at cleaning shoe is Y%) and the ratio is compared to a ratio threshold. In yet another implementation, the split percentage between losses at the separator and cleaning shoe may be compared to a threshold range of split percentages. In one non-limiting example, a threshold range for grain loss split may be between 40-60%. Thus, if the first grain loss sensor 148 detects 45% of the grain loss is in the separator and the second grain loss sensor 152 detects 55% of the grain loss is in the cleaning shoe, the detected percentage split of 45-55% falls within the threshold range of 40-60%. If, however, the first grain loss sensor 148 detects 70% of the grain loss is in the separator and the second grain loss sensor 152 detects 30% of the grain loss is in the cleaning shoe, the detected percentage split of 70-30% falls outside of the threshold range of 40-60%.

In further implementations, an operator may be shown the split graphically on the operator interface 252. The operator 250 may determine the split in grain losses between the separator and cleaning shoe is either satisfactory or unsatisfactory. In this implementation, block 516 may be manually executed by the operator. In other implementations, the split percentage may be compared to the threshold range and a determination by the control system 202 is made whether the split percentage satisfies the threshold range in block 516.

If the grain loss split satisfies the threshold in block 516, method 500 advances to block 520 where a determination is made whether another calibration process is to be performed. If, however, the grain loss split does not satisfy the threshold in block 516, method 500 advances to block 518 where a machine setting or speed is adjusted to affect the grain loss split. In some implementations, a communication may be sent to the operator interface 252 where an instruction is provided to the operator to make the adjustment to the machine setting or speed. In several implementations, the software algorithm may include logic that provides instructions or a series of prompts for which machine setting or speed to adjust in order to shift the amount of grain loss between the separator and the cleaning shoe. For example, if it is determined that a higher amount of grain loss is coming from the separator, the logic may instruct the operator to make machine setting or speed adjustments to shift a portion of the grain loss from the separator to the cleaning shoe. As adjustments are made, another calibration process may be performed by repeating method 500 and, in particular, blocks 504-516 to evaluate if the adjustments shifted the grain loss split.

In order to shift or re-balance the grain loss between the separator and cleaning shoe, adjustments may include, for example, adjusting a speed of the separator or the size of concave opening in the threshing assembly 26. Other adjustments to the separator and cleaning shoe may be made to help shift or re-balance the grain loss between the separator and cleaning shoe.

In block 520, a determination is made again if another calibration process needs to be performed. Similar criteria such as those considered in block 504 may be evaluated to make the determination in block 520. For example, while the grain loss split may satisfy the threshold range in block 516, an operator may desire the grain loss split be closer to 50-50 and thus a machine setting or speed may be adjusted and another calibration process is performed. Here, method 500 advances from block 520 to block 506 where the stability of the machine 10 is re-evaluated. Alternatively, if another calibration process is not performed (e.g., criteria is not met for performing another calibration process), method 500 advances from block 520 to block 522 where the machine continues to perform the harvesting operation.

The threshold range in block 516 may be predefined or predetermined. The threshold range may be adjustable by the operator. For example, the operator may desire a tighter threshold range where the split between grain losses at the separator and cleaning shoe is more even. The threshold range may also differ for different machines. Moreover, the threshold range may differ based on the type or variety of crop being harvested. Further, the threshold range may be different at varying machine speeds or feed rates. Crop moisture and field conditions may also impact the threshold range.

In some implementations, the logic may preclude an operator from entering faulty information as the threshold range or another input (e.g., grain loss measurement).

Another aspect of the present disclosure is the ability of the machine or combine harvester through the agricultural system 180 to communicate a location in the field where a ground truth process is to be executed based on where the first and second grain loss sensors 148, 152 detected grain loss in the separator and cleaning shoe, respectively. In a conventional calibration process to calibrate grain loss, an operator may trigger or press a button in the cab of the machine to initiate the calibration process. The operator may then stop the machine, exit the machine, and inspect the ground behind the machine that has been harvested to perform a grain loss measurement or ground truth process. In this circumstance, however, the operator often is not inspecting the ground at the location in which the button in the cab was pressed to initiate the calibration process. Instead, the operator may be inspecting an area in the field offset or displaced from where the calibration process was initiated from the cab. Conventional grain loss monitoring systems do not identify where the grain loss should be inspected in the field via a ground truth process, and therefore the visual inspection in the field is often not at the same location in the field compared to where in the field the grain loss was detected by the grain loss sensors. Moreover, the conventional grain loss monitoring system does not specify the location in the field for the grain loss measurement and therefore a third party or other member of a harvesting team is unable to perform the ground truth process at the same location in the field where the grain loss sensors detected grain loss.

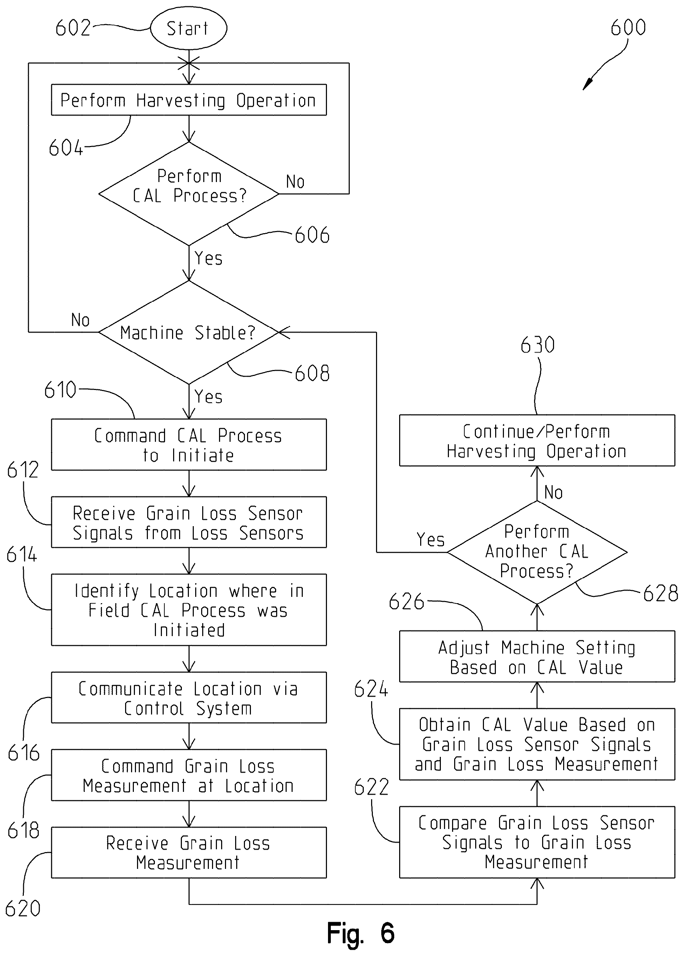

In this disclosure, the accuracy of the grain loss monitoring system and method of calibrating grain loss may be improved by communicating where in the field the calibration process was initiated and the location of where the grain loss measurement or ground truth process needs to be executed. Method 600 in Fig. 6 is one example implementation of how the accuracy of calibrating grain loss can be improved.

Referring to Fig. 6, the example implementation of method 600 may be executed for calibrating grain loss and identifying a more accurate location of where a grain loss measurement (i.e., ground truth process) is to be executed. The method 600 is shown including a plurality of blocks that may be executed by one or more of the processor 182, the communication system 192, the data store 194, the loss sensor calibration system 200, the control system 202, the controllable subsystem 204, the operator 250, the operator interface 252, the mobile device 254, another device or system otherwise shown in Fig. 2 of the agricultural system 180, or another device, system or third party not shown in Fig. 2. Moreover, the plurality of blocks of method 600 may be executed in any order. Thus, the order of the plurality of blocks in Fig. 6 is only shown as a single implementation of the method 600, and other implementations of the method 600 may include fewer blocks, more blocks, and/or the plurality of blocks arranged in an order different from that of Fig. 6. In other words, the method 600 of Fig. 6 is only one example implementation of several implementations contemplated by the present disclosure and is not intended to limit the scope of the disclosure.

Referring to Fig. 6, the method 600 begins at a first start block 602 and advances to block 604 where an agricultural machine 10 is performing a harvesting operation in a field. During the harvesting operation, method 600 advances to block 606 where a decision is made whether to perform a calibration of the grain loss monitoring system. In method 600, block 606 may be executed automatically via a software algorithm executed by the processor 182 or control system 202. For example, the decision to perform calibration in block 606 may be based on different criteria such as time, crop type, crop variety, moisture, ambient conditions, and loss value outside of expected range. Each criteria is described above with respect to block 304.

If it is determined in block 606 that calibration does not need to be performed, then method 600 returns to block 604 and the machine 10 continues the harvesting operation without performing calibration. If, however, in block 606 it is determined that one or more criteria is met for performing calibration, then method 600 advances to block 608 where a determination is made whether the machine 10 is operating at a stable condition. Several examples of criteria that may be considered in block 608 include clean grain mass flow, tailings volume sensors, ground speed, engine power, rotor drive pressure or power, and predictions of crop in front of the machine 10. It can be desirable to calibrate the grain loss monitoring system when in stable conditions to more accurately match the sensed grain loss via the grain loss sensors 148, 152 to the measured grain loss via a ground truth process. Each of the aforementioned criteria may include a tolerance band or threshold range in which values for each of the criteria may be compared to the corresponding tolerance band or threshold range in block 608. Each criteria is described above with respect to block 306.

If it is determined in block 608 that stable conditions do not exist, then method 600 returns to block 604. If, however, it is determined in block 608 that stable conditions do exist, then method 600 advances to block 610. In block 610, a calibration process is initiated and the grain loss sensors 148, 152 detect grain loss and send sensor signals 260 indicative of the detected grain loss to the control system 202. The calibration process may be initiated by an operator pressing or triggering a button in the cab, a third party sending an instruction from a mobile device 254 remote from the machine 10 to initiate calibration, or the control system 202 may initiate calibration based on logic in a software algorithm.

Once the calibration process is initiated in block 610, the grain loss sensor signals 260 may be received by the control system 202 in block 612. In some implementations, the amount of grain loss detected by the sensors 148, 152 may be communicated and displayed on an operator interface 252.

Method 600 further identifies the location in the field where the calibration process was initiated in block 614. Block 614 may be executed in any number of ways. For example, block 614 may be executed by a geographic location sensor 147 identifying the location in the field and communicating the location to the control system 202 in block 616. The location can then be transmitted to the operator interface or a mobile device 254 located on or remote from the machine 10. The location may include GPS coordinates so that a grain loss measurement (e.g., ground truth process) may be made at that location corresponding to where the calibration process was initiated. In one implementation, the location identified by the geographic location sensor 147 may be within a few inches, feet, or meters corresponding to where the calibration process was initiated, e.g., where the operator pressed or triggered the button in the cab.

In another implementation, the geographic location sensor 147 may communicate the location in block 616 of where to perform the grain loss measurement on a map displayed on a screen in the cab of the machine. The display may be part of the operator interface 252. The location may include geospatial coordinates corresponding to the field being harvested. In some implementations, the operator 250 may control the machine directly to the location identified in block 614 or the machine 10 may automatically traverse the field to the location. In alternative implementations, the operator 250 may communicate the location from the map to a third party (e.g., a member of the harvesting team) where to perform the grain loss measurement. For example, the operator 250 may send a message to a mobile device 254 (e.g., mobile phone, laptop, tablet, computing device, etc.) in block 616 of the location.

In a further implementation, the location identified in block 614 may be communicated to a grain cart tractor or operator in block 616. The location may include a position within the field including geospatial coordinates or other location coordinates to notify the third party where in the field to perform the grain loss measurement.

In yet another implementation, the location identified in block 614 may be communicated by the control system 202 or other device in the agricultural system 180 (e.g., the communication system 192) to a remote sensing vehicle to move to the location to perform the grain loss measurement. A command to perform the grain loss measurement may be executed in block 618. The remote sensing vehicle may include an autonomous vehicle, a drone, a utility vehicle or other known vehicle.

Block 614 of method 600 may also be performed by marking a position on the agricultural machine. In yet a further implementation, block 614 may be performed by marking the ground at the location the calibration process is initiated. This may be done in any number of ways including adjusting the header height to cut the crop at a different height, adjusting spreader width to identify the location based on a different width of residue being discharged from the machine, knife bank position, or a modified travel path of the machine at the location of initiation. For example, the modified travel path may be a small 'S' curve in the field. To modify the travel path of the agricultural machine, a steering actuator for controlling a wheel, track, etc. may be adjusted to produce a visual marker indicative of the location in the field where the calibration process is initiated. Other examples of how the ground may be marked is via a foam mark or paint discharged from a paint ball gun onto the ground. Any visual mark left on the ground at the location of initiation is contemplated in this disclosure. In a field where more than one agricultural machine 10 is harvesting crop, each agricultural machine 10 may mark the ground in a unique manner that is different from the other machines so that it is clear which machine a corresponding mark belongs to. In one example, this may be marking the field with a different color for each machine 10.

In yet another implementation, block 614 may be executed using an integrated loss drop pan. For example, the pan may be magnetically coupled to the chassis 12 or body of the machine 10 and released from the machine 10 upon initiation of the calibration process. The pan may fall onto the ground at approximately the same location in the field where the grain loss sensors detect grain loss, and the pan may collect grain lost from the machine during the harvesting operation.

It is understood that there is variability in the field and in the operation of the agricultural machine. By accurately synchronizing the location of where the calibration process is initiated (e.g., where the operator pressed or triggered the calibration button in the cab) and where in the field the grain loss measurement (e.g., ground truth process) is to be taken, the grain loss calibration can be improved. In block 616 of the method 600, the control system communicates the location of where to perform the grain loss measurement and in block 618 the control system sends an instruction to perform the grain loss measurement. Once the grain loss measurement is obtained, the control system 202 receives the grain loss measurement in block 620.

Method 600 advances to block 622 where the grain loss sensor signals 260 from the first and second grain loss sensors 148, 152 may be compared to the grain loss measurement. Next, method 600 advances to block 624 where the control system 202 obtains a calibration value based on the grain loss sensor signals 260 and grain loss measurement. One or more machine settings or speeds may be adjusted in block 626 based on the calibration value to improve the grain loss of the machine 10. After block 626, method 600 advances to block 628 where a determination is made whether to perform another calibration process. Here, an operator 250 or the control system 202 may determine that even after making the adjustment to the one or more machine settings or speeds in block 626, the grain loss is still excessive or the grain loss monitoring system needs further calibration. The criteria for determining whether to perform a calibration process may be considered by the control system 202 in block 628. Moreover, the operator 250 or control system 202 may determine it is necessary to perform a multi-point calibration as described above with respect to method 300. If so, the operator 250 or control system 202 may determine it is necessary to return to block 608 and repeat method 600 one or more additional times. As such, if it is determined in block 628 to perform another calibration process, method 600 advances to block 608. If, however, it is determined in block 628 not to perform another calibration process, method 600 advances to block 630 where the machine 10 continues performing the harvesting operation.

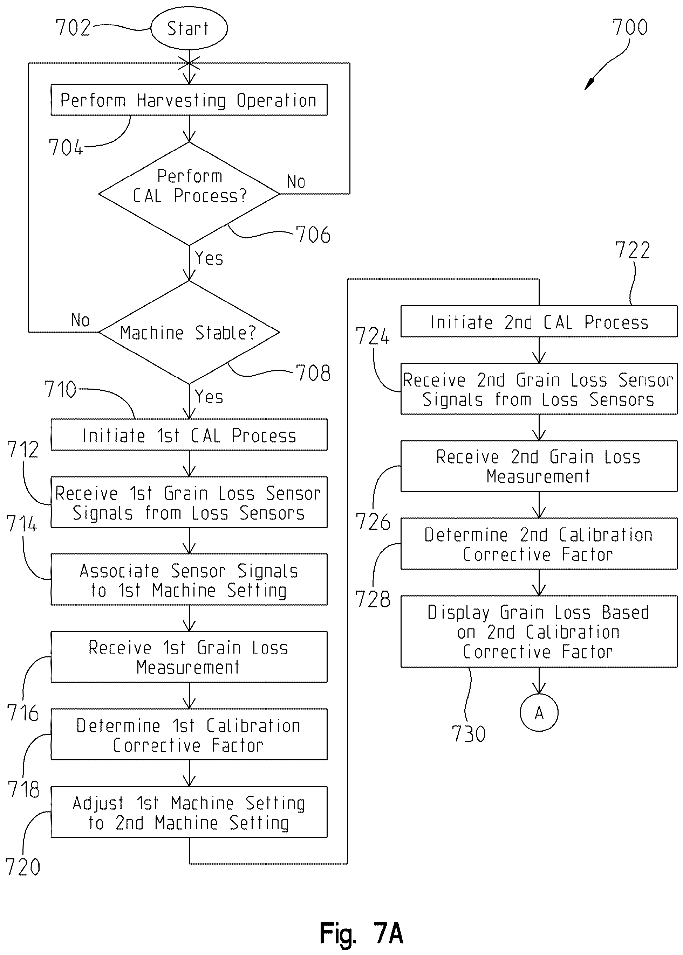

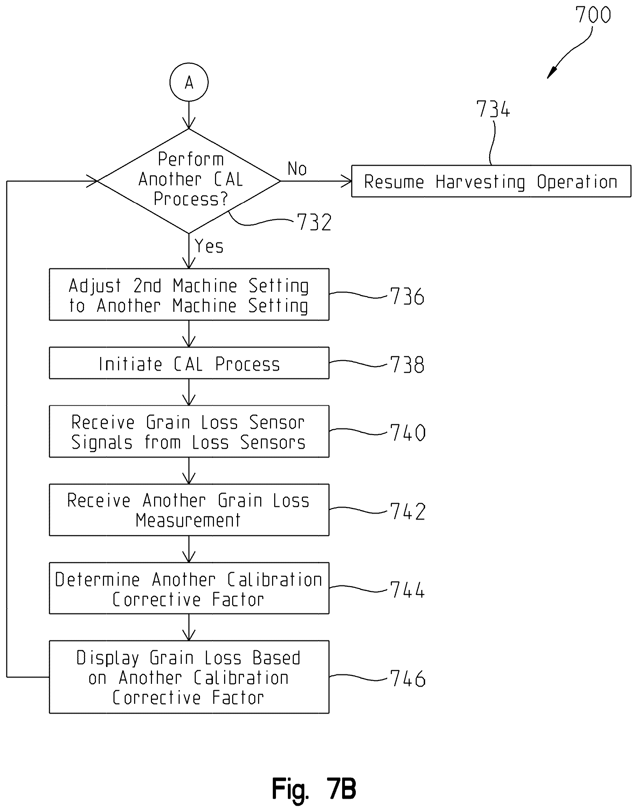

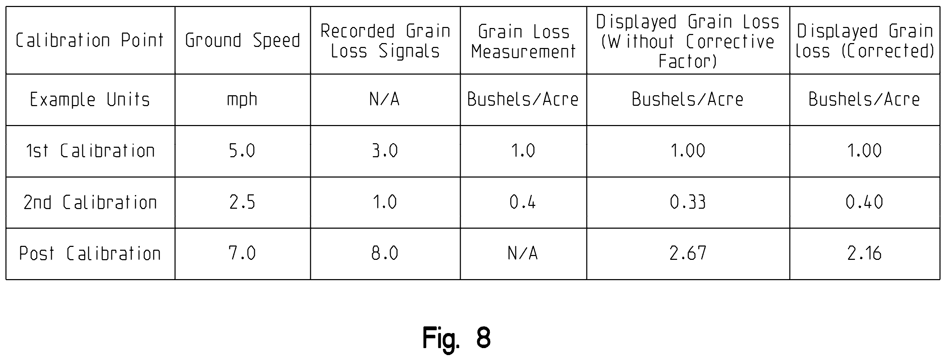

In Figs. 7A-B and 8, another example implementation of a method for calibrating grain loss of an agricultural machine such as a combine harvester is disclosed. In Figs. 7A-B, method 700 is shown including a plurality of blocks that may be executed by one or more of the processor 182, the communication system 192, the data store 194, the loss sensor calibration system 200, the control system 202, the controllable subsystem 204, the operator 250, the operator interface 252, the mobile device 254, another device or system otherwise shown in Fig. 2 of the agricultural system 180, or another device, system or third party not shown in Fig. 2. Moreover, the plurality of blocks of method 700 may be executed in any order. Thus, the order of the plurality of blocks in Figs. 7A-B is only shown as a single implementation of the method 700, and other implementations of the method 700 may include fewer blocks, more blocks, and/or the plurality of blocks arranged in an order different from that of Figs. 7A-B. In other words, the method 700 of Figs. 7A-B is only one example implementation of several implementations described herein and contemplated by the present disclosure.

Referring to Figs. 7A-B, the method 700 begins at a first start block 702 and advances to block 704 where an agricultural machine 10 is performing a harvesting operation in a field. During the harvesting operation, method 700 advances to block 706 where a decision is made whether to perform a calibration of the grain loss monitoring system. In method 700, block 706 may be executed automatically via a software algorithm executed by the processor 182 or control system 202. For example, the decision to perform calibration in block 706 may be based on different criteria such as time, crop type, crop variety, moisture, ambient conditions, and loss value outside of expected range. Each criteria is described above with respect to block 304.

If it is determined in block 706 that calibration does not need to be performed, then method 700 returns to block 704 and the agricultural machine 10 continues the harvesting operation without performing calibration. If, however, in block 706 it is determined that one or more criteria is met for performing calibration, then method 700 advances to block 708 where a determination is made whether the agricultural machine 10 is operating at a stable condition. Several examples of criteria that may be considered in block 708 include clean grain mass flow, tailings volume sensors, ground speed, engine power, rotor drive pressure or power, and predictions of crop in front of the agricultural machine 10. It can be desirable to calibrate the grain loss monitoring system when in stable conditions to more accurately match the sensed grain loss via the grain loss sensors 148, 152 to the measured grain loss via a ground truth process. Each of the aforementioned criteria may include a tolerance band or threshold range in which values for each of the criteria may be compared to the corresponding tolerance band or threshold range in block 708. Each criteria is described above with respect to block 306.

If it is determined in block 708 that stable conditions do not exist, then method 700 returns to block 704. If, however, it is determined in block 708 that stable conditions do exist, then method 700 advances to block 710. In block 710, a first calibration process is initiated at a first machine setting and the grain loss sensors 148, 152 detect grain loss and send sensor signals 260 indicative of the detected grain loss to the control system 202. The first calibration process may be initiated in block 710 by an operator pressing or triggering a button in the cab, a third party sending an instruction from a mobile device 254 remote from the agricultural machine 10 to initiate calibration, or the control system 202 may initiate calibration based on logic in a software algorithm.

Once the calibration process is initiated in block 710, the grain loss sensor signals 260 may be received by the control system 202 in block 712. In some implementations, the amount of grain loss detected by the sensors 148, 152 may be communicated and displayed on an operator interface 252. In block 714, the grain loss sensor signals 260 indicative of grain loss detected by the sensors 148, 152 is associated or correlated to the first machine setting. The control system 202, for example, may store the detected grain loss sensors 260 and first machine setting in a memory such as the data store controller 234.

In block 716, method 700 advances such that the control system 202, for example, receives a first grain loss measurement. The first grain loss measurement may be prompted by a command or instruction sent to an operator interface 252 to instruct the operator 250 or to a mobile device 254 of a third party to perform a manual ground loss measurement via a ground truth process. In some implementations, the operator 250 may stop the agricultural machine 10 from harvesting, exit the agricultural machine, and perform an inspection of grain loss in an area outside of the agricultural machine 10. In other implementations, a loss pan may be released or dropped from the machine 10 to collect lost grain which is then inspected by the operator 250 or a third party. In several implementations, a third party is sent a communication to perform the inspection of the ground for grain loss as part of block 716.

Once block 716 is performed, method 700 advances to block 718 where the control system 202 determines a first calibration corrective factor. In one non-limiting example, the first calibration corrective value may be determined as a function of the first grain loss sensor signals and the first grain loss measurement. In one implementation, for example, the first calibration corrective value may be determined by the ratio of the first grain loss measurement to the sum of the first grain loss sensor signals.

Once the first calibration corrective factor is determined in block 718, method 700 advances to block 720 where the first machine setting is adjusted to a second machine setting. In one implementation, the first machine setting may be a ground speed of the machine. In another implementation, the first machine setting may be a cleaning fan speed. In a further implementation, the first machine setting may be a throughput of the machine (e.g., yield in terms of bushels per acre). Other machine settings as described herein may be adjusted in other implementations. In the same way, the second machine setting may be the same as the first machine setting but set at a different value (e.g., machine setting being ground speed where the first machine setting is 5 miles per hour (mph) and the second machine setting is 7.5 mph). Alternatively, the machine setting may change. For example, the first machine setting may be ground speed set at 5 miles per hour and the second machine setting may be adjusting cleaning fan speed from 1000 rpm to 750 revolutions per minute (rpm).

Once the machine setting is adjusted to the second machine setting in block 720, method 700 advances to block 722 where a second calibration process is initiated. The second calibration process may be initiated in block 722 in the same manner the first calibration process is initiated in block 710. Once the second calibration process is initiated, method 700 may optionally perform block 708 to ensure the agricultural machine 10 is still stable. If so, method 700 advances to block 724 where the first and second grain loss sensors 148, 152 detect grain loss in the separator and cleaning shoe. Second grain loss sensor signals are communicated by the first and second grain loss sensors 148, 152 to the control system 202, for example, in block 724.

In block 726, the control system 202 may receive a second grain loss measurement via a grain truth process. Similar to the first grain loss measurement, the second grain loss measurement may be prompted by a command or instruction sent to an operator interface 252 to instruct the operator 250 or to a mobile device 254 of a third party to perform a manual ground loss measurement via a ground truth process. In some implementations, the operator 250 may stop the agricultural machine 10 from harvesting, exit the agricultural machine, and perform an inspection of grain loss in an area outside of the agricultural machine 10. In other implementations, a loss pan may be released or dropped from the machine 10 to collect lost grain which is then inspected by the operator 250 or a third party. In several implementations, a third party is sent a communication to perform the inspection of the ground for grain loss as part of block 726.

Once the second grain loss measurement is received by the control system 202 in block 726, method 700 advances to block 728 where a second calibration corrective factor is determined. In one implementation, the second calibration corrective factor may be determined in a similar manner as the first calibration corrective factor in block 718, i.e., as a function of the second grain loss sensor signals and the second grain loss measurement. The second calibration corrective factor, however, may also be determined on the basis of the second grain loss sensor signals, the second grain loss measurement, and one or more coefficient factors. This is described below with reference to Fig. 8. Once the second calibration corrective factor is determined in block 728, a corrected grain loss value may be displayed in accordance with block 730. The corrected grain loss value may be displayed on an operator interface 252 or a mobile device 254, for example.

Following execution of block 730, method 700 advances to block 732 where a decision is made whether to perform a calibration of the grain loss monitoring system. In method 700, block 732 may be executed automatically via a software algorithm executed by the processor 182 or control system 202. For example, the decision to perform calibration in block 732 may be based on different criteria such as time, crop type, crop variety, moisture, ambient conditions, and loss value outside of expected range. Each criteria is described above with respect to block 304.

If it is determined in block 732 that calibration does not need to be performed, then method 700 advances to block 734 and the agricultural machine 10 continues the harvesting operation without performing calibration. If, however, in block 732 it is determined that one or more criteria is met for performing calibration, then method 700 advances to block 736 where the machine setting is adjusted again. In one implementation, the machine setting may be adjusted back to the first machine setting. In another implementation, the machine setting may be adjusted to a different machine setting. In some implementations, the type of machine setting may be adjusted (e.g., ground speed, cleaning fan speed, speed of the separator, machine throughput, etc.). In any event, once the machine setting is adjusted in block 736, another calibration process is initiated in block 738. The calibration process in block 738 may be initiated in a similar way as the first and second calibration processes are initiated in method 700.

Once initiated, the first calibration process may be executed in block 740 where the first and second grain loss sensors 148, 152 detect grain loss in the separator and cleaning shoe, and communicate the detected grain loss to the control system 202. Following execution of block 740, method 700 advances to block 742 where another grain loss measurement is received by the control system 202. Similar to the first and second grain loss measurements, the grain loss measurement in block 742 may be prompted by a command or instruction sent to an operator interface 252 to instruct the operator 250 or to a mobile device 254 of a third party to perform a manual ground loss measurement via a ground truth process. In some implementations, the operator 250 may stop the agricultural machine 10 from harvesting, exit the agricultural machine, and perform an inspection of grain loss in an area outside of the agricultural machine 10. In other implementations, a loss pan may be released or dropped from the machine 10 to collect lost grain which is then inspected by the operator 250 or a third party. In several implementations, a third party is sent a communication to perform the inspection of the ground for grain loss as part of block 742.

Once the grain loss measurement is received by the control system 202 in block 742, method 700 advances to block 744 where another calibration corrective factor is determined. In one implementation, the calibration corrective factor may be determined in block 744 in a similar manner as the first and second calibration corrective factors, i.e., as a function of the second grain loss sensor signals and the second grain loss measurement. The calibration corrective factor may also be determined in block 744 on the basis of the grain loss sensor signals in block 740, the grain loss measurement in block 742, and one or more coefficient factors. This too is described below with reference to Fig. 8. Once the calibration corrective factor is determined in block 744, a corrected grain loss value may be displayed in accordance with block 746. The corrected grain loss value may be displayed on an operator interface 252 or a mobile device 254, for example.

Although not shown in Figs. 7A-B, method 700 may include optional blocks executed in some implementations. For example, method 700 may include an optional block that compares the coefficient factors to a threshold. In another example, method 700 may include an optional block that compares the calibration corrective factors to a threshold. In some instances, if the factors do not satisfy the threshold, an instruction may be sent to the operator to repeat the calibration process at the same machine setting. The thresholds may be predefined based on expected grain loss (e.g., a factory setting), set by an operator or third party via a mobile device 254, or determined through control logic in the control system 202.

In some implementations, a post-calibration corrective factor may be established on the basis of the different calibration values determined during execution of method 700 at the different machine settings. Grain loss may be corrected on the basis of the post-calibration corrective factor based on a detected grain loss via the first and second grain loss sensors 148, 152.

Moreover, in some implementations, each displayed corrected grain loss value may be stored by the control system 202 in, for example, the data store controller 234 where a linear regression may be generated based on each value. In other implementations, a polynomial curve may be generated based on a plurality of corrected grain loss values.

In Fig. 8, an example implementation of a table 800 of data collected and processed by the control system 202 upon execution of method 700 is shown. Method 700 is executed as described above upon execution of blocks 702, 704, 706, and 708. Once it is determined a calibration process is to be performed in block 706 and the machine is stable in block 708, a first calibration process is initiated in block 710. The first and second grain loss sensors 148, 152 detect grain loss in the separator and cleaning shoe, respectively, and communicate grain loss sensor signals to the control system 202 in block 712. The agricultural machine 10 is operating at a first machine setting of 5.0 mph as shown in table 800. In this non-limiting example, the first grain loss sensor 148 may detect a 1.0 bushel per acre loss and the second grain loss sensor 152 may detect a 2.0 bushel per acre loss. The first grain loss sensor signal corresponds to the 1.0 bushel per acre grain loss and the second grain loss sensor signal corresponds to the 2.0 bushel per acre grain loss. Upon receiving the grain loss sensor signals in block 712, the control system 202 may determine a total of 3.0 bushels per acre grain loss from the first and second grain loss sensors, as shown in table 800 associated with the first machine setting of 5.0 mph.

A ground truth process may be executed and a first grain loss measurement of 1.0 bushel of acre is communicated to the control system 202 in block 716. In block 718, the control system 202 may determine a first calibration corrective factor as a function of the grain loss sensor signals and first grain loss measurement. In this implementation, the first calibration corrective factor does not take into consideration the machine setting (e.g., ground speed). For example, in this implementation, the first calibration corrective factor may be determined as the ratio of the first grain loss measurement to the sum of the grain loss sensor signals. As shown in the table 800, the displayed grain loss without taking into account the machine setting of ground speed is shown as 1.0 bushel of acre of grain loss. This is determined by multiplying the detected grain loss sensor signal (i.e., 3.0 bushel per acre) and the ratio of the first grain loss measurement to the sum of the grain loss sensor signals (i.e., 1.0 bushel per acre to 3.0 bushel per acre).

In some implementations, the machine setting (e.g., ground speed) may be factored into the calibration corrective factor. In this implementation, the control system 202 may consider a ground speed coefficient and a raw loss coefficient. The ground speed coefficient and raw loss coefficient may be predefined coefficients stored by the control system 202. In other implementations, the control system 202 may determine the ground speed coefficient and raw loss coefficient. In some implementations, the control system 202 may include logic, an algorithm, look up table, chart, graph, or other means for determining a first coefficient reflective of the machine setting being controlled and the raw loss coefficient.

The first coefficient may depend on the type of machine setting being controlled. In Fig. 8, the first coefficient is based on ground speed, but the first coefficient may be different if the machine setting being adjusted is cleaning fan speed, speed of the separator, machine throughput, etc.

In the implementation of Fig. 8, the ground speed coefficient is predefined as 0.08 and the raw loss coefficient (or second coefficient) is predefined as 0.2. Thus, to compensate for the ground speed, the displayed corrected grain loss may be determined as follows:

$$Corrected\ Grain\ Loss$$
$$= (1st\ Coefficient\ x\ Machine\ Setting)$$
$$+ (2nd\ Coefficient\ x\ Recorded\ Grain\ Loss\ Signals)$$

In block 720 of method 700, the machine setting is adjusted to a second machine setting. In Fig. 8, the second machine setting is adjusting ground speed from 5.0 mph to 2.5 mph. Once the machine setting is adjusted in block 720, method 700 advances to block 724 where the second calibration process is initiated at 2.5 mph. In block 724, the first and second grain loss sensors communicate grain loss sensor signals to the control system 202. In the example of Fig. 8, the first grain loss sensor 148 detects 0.5 bushels per acre grain loss and the second grain loss sensor 152 detects 0.5 bushels per acre grain loss. The total grain loss detected by the grain loss sensors is 1.0 bushel per acre grain loss as shown in the table 800 under the heading "Recorded Grain Loss Signals" for the second calibration.

Method 700 advances to block 726 where a second grain loss measurement is received following a ground truth process. The second grain loss measurement is shown in the example of Fig. 8 as 0.4 bushels per acre. Thus, the detected grain loss by the grain loss sensors is higher than the actual grain loss measured in the field. The control system 202 may compute the grain loss as a function of the grain loss sensor signals (e.g., 1.0 bushels per acre grain loss) and second grain loss measurement (e.g., 0.4 bushels per acre grain loss) without taking into account the machine setting. As described above, the non-corrected grain loss may be determined as follows:

$$Non-Corrected\ Grain\ Loss = Recorded\ Grain\ Loss\ Signals\ at\ Second\ Calibration$$
$$x\ \frac{Grain\ Loss\ Measurement\ at\ First\ Calibration}{Recorded\ Grain\ Loss\ Signals\ at\ First\ Calibration}$$

In the example implementation of Fig. 8, the ratio of grain loss measurement and recorded grain loss signal is 0.33 bushels per acre. With the Recorded Grain Loss Signal at the second calibration being 1.0 bushel per acre, the displayed grain loss without correcting for the machine setting is 0.33 bushels per acre. However, when the machine setting is accounted for, the corrected grain loss is determined based on the formula above resulting in a displayed corrected grain loss of 0.40 bushels per acre.

In the example implementation of Fig. 8, the table 800 further illustrates a third or post-calibration grain loss based on a machine setting of 7.0 mph. Here, the total grain loss detected by the first and second grain loss sensors is 8.0 bushels per acre. The non-corrected grain loss is (1/3) * the recorded or detected grain loss (e.g., 8.0 bushels per acre). When correcting for the adjustment to ground speed, the corrected grain loss at 7.0 mph is 2.16 bushels per acre.

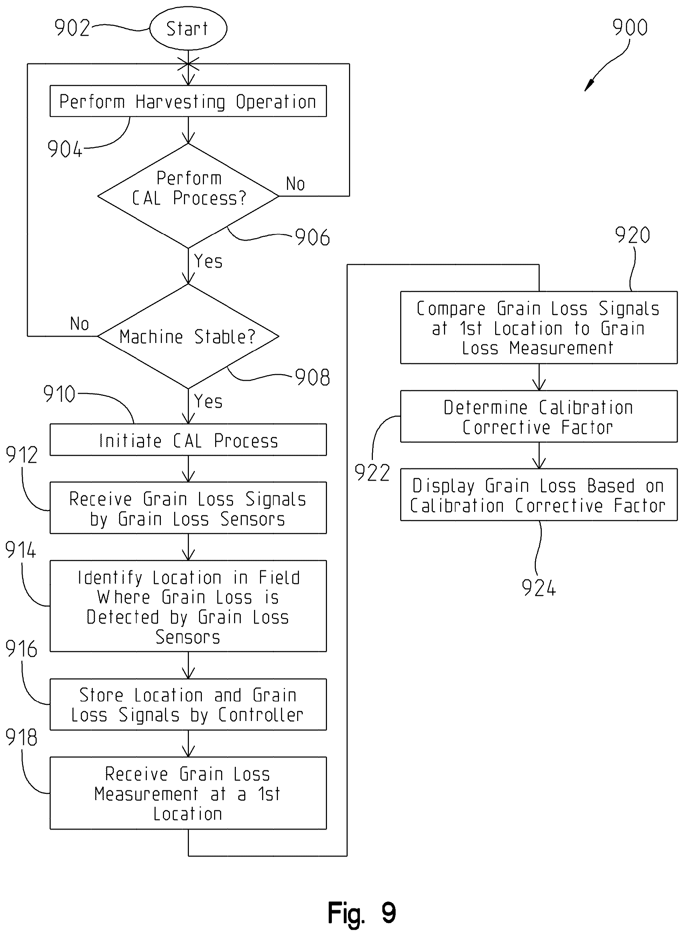

Referring to Fig. 9 of the present disclosure, an example implementation of a method for calibrating grain loss of an agricultural machine such as a combine harvester is disclosed. In Fig. 9, method 900 is shown including a plurality of blocks that may be executed by one or more of the processor 182, the communication system 192, the data store 194, the loss sensor calibration system 200, the control system 202, the controllable subsystem 204, the operator 250, the operator interface 252, the mobile device 254, another device or system otherwise shown in Fig. 2 of the agricultural system 180, or another device, system or third party not shown in Fig. 2. Moreover, the plurality of blocks of method 900 may be executed in any order. Thus, the order of the plurality of blocks in Fig. 9 is only shown as a single implementation of the method 900, and other implementations of the method 900 may include fewer blocks, more blocks, and/or the plurality of blocks arranged in an order different from that of Fig. 9. In other words, the method 900 of Fig. 9 is only one example implementation of several implementations described herein and contemplated by the present disclosure.

Referring to Fig. 9, the method 900 begins at a first start block 902 and advances to block 904 where an agricultural machine 10 is performing a harvesting operation in a field. During the harvesting operation, method 900 advances to block 906 where a decision is made whether to perform a calibration of the grain loss monitoring system. In method 900, block 906 may be executed automatically via a software algorithm executed by the processor 182 or control system 202. For example, the decision to perform calibration in block 906 may be based on different criteria such as time, crop type, crop variety, moisture, ambient conditions, and loss value outside of expected range. Each criteria is described above with respect to block 304.

If it is determined in block 906 that calibration does not need to be performed, then method 900 returns to block 904 and the agricultural machine 10 continues the harvesting operation without performing calibration. If, however, in block 906 it is determined that one or more criteria is met for performing calibration, then method 900 advances to block 908 where a determination is made whether the agricultural machine 10 is operating at a stable condition. Several examples of criteria that may be considered in block 908 include clean grain mass flow, tailings volume sensors, ground speed, engine power, rotor drive pressure or power, and predictions of crop in front of the agricultural machine 10. It can be desirable to calibrate the grain loss monitoring system when in stable conditions to more accurately match the sensed grain loss via the grain loss sensors 148, 152 to the measured grain loss via a ground truth process. Each of the aforementioned criteria may include a tolerance band or threshold range in which values for each of the criteria may be compared to the corresponding tolerance band or threshold range in block 908. Each criteria is described above with respect to block 306.

If it is determined in block 908 that stable conditions do not exist, then method 900 returns to block 904. If, however, it is determined in block 908 that stable conditions do exist, then method 900 advances to block 910. In block 910, a calibration process is initiated at a first machine setting and the grain loss sensors 148, 152 detect grain loss and send sensor signals 260 indicative of the detected grain loss to the control system 202. The calibration process may be initiated in block 910 by an operator pressing or triggering a button in the cab, a third party sending an instruction from a mobile device 254 remote from the agricultural machine 10 to initiate calibration, or the control system 202 may initiate calibration based on logic in a software algorithm.

Once the calibration process is initiated in block 910, the grain loss sensor signals 260 may be received by the control system 202 in block 912. In some implementations, the amount of grain loss detected by the sensors 148, 152 may be communicated and displayed on an operator interface 252. Once the grain loss sensor signals 260 are received in block 912, method 900 advances to block 914.

In block 914, the control system 202 identifies a location in the field via geospatial coordinates where the calibration process was initiated in block 910. In one implementation, the location may be communicated to the control system 202 via a sensor signal 260 from a geographic location sensor 147. In another implementation, when the calibration process is initiated, the control system 202 may send a request to the geographic location sensor 147, the first grain loss sensor 148, and the second grain loss sensor 152 for information. The information may include geospatial coordinates from the geographic location sensor 147, a first grain loss of the separator by the first grain loss sensor 148, and a second grain loss of the cleaning shoe by the second grain loss sensor 152. In other implementations, the geographic location sensor 147, the first grain loss sensor 148, and the second grain loss sensor 152 may continuously communicate sensor signals 260 to the control system 202 of the geospatial location and grain losses in the separator and cleaning shoe. In turn, the control system 202 may store each location and grain loss sensor signal with an associated time stamp in the data store controller 234 or other memory device. In one non-limiting example, the location and grain loss sensor signal may be stored in a table such as the example table 1 shown below:

**Table 1: Example Data Storage of Location and Grain Loss Detection Values**

| Time Stamp | Location Sensor Signal | First Grain Loss Sensor Signal | Second Grain Loss Sensor Signal | Total Grain Loss |
|---|---|---|---|---|
| $T_1$ | $L_1$ | 0.50 | 0.70 | 1.20 |
| $T_2$ | $L_2$ | 0.75 | 0.75 | 1.50 |
| $T_3$ | $L_3$ | 1.25 | 0.90 | 2.15 |
| $T_N$ | $L_N$ | $GL1_N$ | $GL2_N$ | $TGL_N$ |

Table 1 is only an example of the type of data that may be stored by the control system 202 in block 916 of method 900. The control system 202 may store less or more data than shown in Table 1 in other implementations.

In block 918, the control system 202 receives a grain loss measurement at a first location. The grain loss measurement may be taken after a ground truth process. In one implementation, a third party may perform the ground truth process and communicate the grain loss measurement in block 918 to the control system 202. For example, the third party may communicate the ground loss measurement via a mobile device 254. In other implementations, the operator of the agricultural machine 10 may perform a ground truth process at the first location and enter the grain loss measurement into the operator interface 252, for example, where the control system 202 receives the grain loss measurement. In any event, the grain loss measurement may include both a grain loss measurement value and geospatial coordinates of the first location.

After block 918, method 900 advances to block 920 where the control system 202 retrieves the grain loss signals at the first location from the data store controller 234 or other memory device. Once the grain loss signals are retrieved, the grain loss measurement is compared to the grain loss signals at the first location. In this manner, the grain loss signals and the grain loss measurement correspond to the same geospatial coordinates.

In block 922, method 900 determines a calibration corrective factor in a similar manner as the first calibration corrective factor in block 718 and the second calibration corrective factor in block 728 are determined. Once the calibration corrective factor is determined in block 728, the corrected grain loss may be displayed on an operator interface 252 or communicated to a mobile device 254.

The present disclosure provides that the agricultural system 180 of Fig. 2 is capable of executing one or more of the plurality of blocks in method 300, method 400, method 500, method 600, method 700, and method 900. The agricultural system 180 is described as including a processor/server 182, a communication system 192, sensors 184, a data store 194, a control system 202, a loss sensor calibration system 200, controllable subsystems 204, and one or more controllers. One or more of these may be capable of executing any one of the plurality of blocks in method 300, method 400, method 500, and method 600. In other implementations, an agricultural machine 10 may include another control system, control unit, or controller for executing one or more of the plurality of blocks in method 300, method 400, method 500, method 600, method 700, and method 900. The control system, control unit, or controller may include the agricultural system 180 or only a portion of the agricultural system 180. Thus, while reference is made throughout this disclosure to the agricultural system 180 or a portion thereof for executing the different methods, the agricultural system 180 is presented only as an example of one type of control system capable of executing the different methods. Other control systems or controllers may be capable of executing one or more of the blocks in method 300, method 400, method 500, method 600, method 700, and method 900.

In this application, including the definitions below, the term "module" or the term "controller" may be replaced with the term "circuit." The term "module" may refer to, be part of, or include: an Application Specific Integrated Circuit (ASIC); a digital, analog, or mixed analog/digital discrete circuit; a digital, analog, or mixed analog/digital integrated circuit; a combinational logic circuit; a field programmable gate array (FPGA); a processor circuit (shared, dedicated, or group) that executes code; a memory circuit (shared, dedicated, or group) that stores code executed by the processor circuit; other suitable hardware components that provide the described functionality; or a combination of some or all of the above, such as in a system-on-chip.

Some or all hardware features of a module may be defined using a language for hardware description, such as IEEE Standard 1364-2005 (commonly called "Verilog") and IEEE Standard 1076-2008 (commonly called "VHDL"). The hardware description language may be used to manufacture and/or program a hardware circuit. In some implementations, some or all features of a module may be defined by a language, such as IEEE 1666-2005 (commonly called "SystemC"), that encompasses both code, as described below, and hardware description.

The term code, as used above, may include software, firmware, and/or microcode, and may refer to programs, routines, functions, classes, data structures, and/or objects. The term shared processor circuit encompasses a single processor circuit that executes some or all code from multiple modules. The term group processor circuit encompasses a processor circuit that, in combination with additional processor circuits, executes some or all code from one or more modules. References to multiple processor circuits encompass multiple processor circuits on discrete dies, multiple processor circuits on a single die, multiple cores of a single processor circuit, multiple threads of a single processor circuit, or a combination of the above. The term shared memory circuit encompasses a single memory circuit that stores some or all code from multiple modules. The term group memory circuit encompasses a memory circuit that, in combination with additional memories, stores some or all code from one or more modules.

The term memory circuit is a subset of the term computer-readable medium. The term computer-readable medium, as used herein, does not encompass transitory electrical or electromagnetic signals propagating through a medium (such as on a carrier wave); the term computer-readable medium may therefore be considered tangible and non-transitory. Non-limiting examples of a non-transitory computer-readable medium are nonvolatile memory circuits (such as a flash memory circuit, an erasable programmable read-only memory circuit, or a mask read-only memory circuit), volatile memory circuits (such as a static random access memory circuit or a dynamic random access memory circuit), magnetic storage media (such as an analog or digital magnetic tape or a hard disk drive), and optical storage media (such as a CD, a DVD, or a Blu-ray Disc).

The apparatuses and methods described in this application may be partially or fully implemented by a special purpose computer created by configuring a general purpose computer to execute one or more particular functions embodied in computer programs. The functional blocks and flowchart elements described above serve as software specifications, which can be translated into the computer programs by the routine work of a skilled technician or programmer.

The computer programs include processor-executable instructions that are stored on at least one non-transitory computer-readable medium. The computer programs may also include or rely on stored data. The computer programs may encompass a basic input/output system (BIOS) that interacts with hardware of the special purpose computer, device drivers that interact with particular devices of the special purpose computer, one or more operating systems, user applications, background services, background applications, etc.

The computer programs may include: (i) descriptive text to be parsed, such as HTML (hypertext markup language), XML (extensible markup language), or JSON (JavaScript Object Notation), (ii) assembly code, (iii) object code generated from source code by a compiler, (iv) source code for execution by an interpreter, (v) source code for compilation and execution by a just-in-time compiler, etc. As examples only, source code may be written using syntax from languages including C, C++, C#, Objective-C, Swift, Haskell, Go, SQL, R, Lisp, Java®, Fortran, Perl, Pascal, Curl, OCaml, Java-Script®, HTML5 (Hypertext Markup Language 5th revision), Ada, ASP (Active Server Pages), PHP (PHP: Hypertext Preprocessor), Scala, Eiffel, Smalltalk, Erlang, Ruby, Flash®, Visual Basic®, Lua, MATLAB, SIMULINK, and Python®.

**Claims**

1. A method of calibrating grain loss on an agricultural machine (10) configured to harvest crop in a field, comprising:

   initiating a calibration process of a grain loss monitoring system (200) on the agricultural machine 10 at a location in the field, the grain loss monitoring system (200) comprising a first sensor (248) configured to detect grain loss in a first portion of the agricultural machine (10) and a second sensor (152) configured to detect grain loss in a second portion of the agricultural machine (10);
   receiving grain loss sensor signals (260) from the first sensor (248) and the second sensor (152);
   identifying the location in the field by a geographic location sensor (147);
   sending a communication to perform a grain loss measurement, the communication including the location at which the grain loss measurement is to be performed;
   receiving the grain loss measurement based on an inspection of grain loss at the location in the field identified by the geographic location sensor (147); and
   determining a grain loss calibration value based on the grain loss sensor signals (260) and the grain loss measurement.

2. The method of claim 1, wherein the sending a communication comprises sending geospatial data detected by the geographic location sensor (147) to a mobile device (254).

3. The method of claim 2, wherein the receiving the grain loss measurement comprises receiving the grain loss measurement from the mobile device (254).

4. The method of claim 1, wherein the sending a communication comprises displaying geospatial data detected by the geographic location sensor (147) on a display of an operator interface (252) in the agricultural machine (10).

5. The method of claim 1, wherein the sending a communication comprises sending geospatial data detected by the geographic location sensor (147) to a second vehicle.

6. The method of claim 5, wherein the sending a communication comprises displaying geospatial data detected by the geographic location sensor (147) on a display of an operator interface (252) in the agricultural machine (10), the geospatial data including the location in the field where the calibration process is initiated, a second location corresponding to the agricultural machine (10) in the field, and a third location corresponding to the second vehicle in the field.

7. The method of claim 5, wherein the grain loss measurement is received from the second vehicle.

8. The method of claim 1, wherein the sending a communication comprises producing a visual marker in the field at the location;
   wherein the producing a visual marker comprises one or more of adjusting a header height of the agricultural machine (10), adjusting a spreader width of the agricultural machine (10) to discharge a different width of residue from the agricultural machine (10,) or controlling a position of a steering actuator of the agricultural machine (10).

9. An agricultural machine (10) configured to harvest crop in a field, comprising:

   a control system (202) configured to control the agricultural machine (10);
   a grain loss monitoring system (200) in communication with the control system (202), the grain loss monitoring system (200) comprising a first sensor (248) and a second sensor (152), the first sensor (248) configured to detect grain loss in a first portion of the agricultural machine (10) and the second sensor (152) configured to detect grain loss in a second portion of the agricultural machine (10); and
   an operator interface (252) disposed in communication with the control system (202), the operator interface (252) configured to receive instructions from an operator (250) or the control system (202);
wherein, the control system (202) is configured to:

initiate a calibration process of the grain loss monitoring system (200) at a location in the field;
receive grain loss sensor signals (260) from the first sensor (248) and the second sensor (152);
identify the location in the field by a geographic location sensor (147);
send a communication to perform a grain loss measurement, the communication including the location at which the grain loss measurement is to be performed;
receive the grain loss measurement based on an inspection of grain loss at the location in the field; and
determine a grain loss calibration value based on the grain loss sensor signals (260) and the grain loss measurement.

10. The agricultural machine (10) of claim 9, wherein the control system (202) is in communication with the geographic location sensor (147), the control system (202) configured to send geospatial data detected by the geographic location sensor (147) to a mobile device (254).

11. The agricultural machine (10) of claim 9, wherein the control system (202) is in communication with the geographic location sensor (147), the control system (202) configured to display the geospatial data on a display of the operator interface (252).

12. The agricultural machine (10) of claim 9, wherein the control system (202) is configured to controllably adjust a height of a cutting head of the agricultural machine (10) or controllably adjust a spreader width of the agricultural machine (10) to discharge a different width of residue from the agricultural machine (10) at the location for identifying the location in the field.

13. The agricultural machine (10) of claim 9, wherein the control system (202) is configured to receive the grain loss measurement from another vehicle or a mobile device (254).

14. A method, comprising:

performing a harvesting operation of crop planted in a field by an agricultural machine (10);
initiating a grain loss calibration process by a control system (202) of the agricultural machine (10) at one or more locations in the field;
receiving one or more grain loss sensor signals (260) at the one or more locations from a first sensor (248) and a second sensor (152), the first sensor (248) detecting grain loss in a first portion of the agricultural machine (10) and the second sensor (152) detecting grain loss in a second portion of the agricultural machine (10);
identifying the one or more locations in the field by a geographic location sensor (147);
storing the one or more locations and the one or more grain loss sensor signals (260) by the control system (202);
receiving a communication from a remote device (254), the communication including a grain loss measurement based on an analysis of grain loss at a first location in the field, the first location corresponding to one of the one or more locations;
retrieving a first grain loss signal (260 of the one or more grain loss signals (260) corresponding to the first location of the one or more locations stored by the control system (202); and
comparing the first grain loss signal (260) to the grain loss measurement.

15. The method of claim 14, further comprising:

determining a calibration corrective factor as a function of the first grain loss signal (260) and the grain loss measurement; and
displaying on an operator interface (252) a corrected grain loss value based on the first grain loss signal (260) and the calibration corrective factor.

Fig. 1

# Agricultural System

— 180 ⓒ

| Processor(s)/Server(s) | Communication System |
|---|---|

— 182    — 192

**Sensor(s)**

| Geographic Location Sensor(s) | — 147 |
|---|---|
| Grain Loss Sensor(s) | — 148,152 |
| Ground Speed Sensor(s) | — 146 |
| Heading/Route/Pose Sensor(s) | |
| Other Operation Stability Parameter Sensor(s) | |
| Other | |

— 186
— 188
— 190

184

Sensor Signal(s)

260

200

**Loss Sensor Calibration System**    — 208

| Operation Stability Processing System | Ⓐ |
|---|---|
| Calibration Trigger Detector | |

— 210

Travel Distance Tracking System

212 —

Ⓑ

**Calibration User Interface Processing System**

214 —

| Instruction Prompt Processor | Distance Display Generator |
|---|---|
| Measurement Location Generator | Measured Value Detector |
| New Scale Factor Interaction Processor | Other |

222 —
226 —
230 —

— 224
— 228
— 232

| Scale Factor Generation System | Scale Factor Application System |
|---|---|

216 —
— 218

220 — Other

Ⓓ

# Fig. 2A

Agricultural System — 180

C

Data Store

Scale Factor —— 194

196 ——

Other —— 198

Other

206

—— 202

Control System

Data Store Controller —— 234

Communication System Controller —— 236

Machine Settings Controller —— 238

Operator Interface Controller —— 240

Other —— 242

256

A

Scale Factor

Scaled Sensor Signal

B

258

Control Signal(s) —— 268

Controllable Subsystem(s) —— 204

244 —— Machine Setting Subsystem(s)

246 —— Operator Interface Subsystem

248 —— Other

D

Mobile Device

Operator Interface(s) —— 252

254

Operator —— 250

**Fig. 2B**

300

320

B → Start — 301

302

Perform Harvesting Operation

Determine
When to Perform
Calibration?
304

No

Yes

Machine Stable?
306

No

Yes

308

Command 1st CAL Process
310

Initiate 1st CAL Process
312

Detect 1st Grain Loss via
Grain Loss Sensors

Receive 1st GL Sensor Signals
314

Command 1st GL Measurement
316

Detect Entry of 1st GL
Measurement by Control System

318

Output Detected 1st GL to
Operator Interface (Op I/F)
322

Output 1st GL Measurement
to Op I/F
324

Calibrate 1st Loss CAL Value
Based on 1st GL Measurement
326

Apply 1st CAL Value to 1st
GL Sensor Signal to Obtain
1st CAL Value
328

Adjust Machine Setting
Based on 1st CAL Value
330

Command 2nd CAL Process

Initiate 2nd CAL Process
332

Detect 2nd Grain Loss via
Grain Loss Sensors
334

Receive 2nd GL Sensor Signals
336

Command 2nd GL Measurement

A

338

Fig. 3A

300

A

340 — Detect Entry of 2nd GL
Measurement by Control System

342 — Output 2nd GL Sensor Signals
and 2nd GL Measurement
to Op I/F

344 — Calibrate 2nd Loss CAL Value
Based on 2nd GL Measurement

346 — Apply 2nd CAL Value to 2nd
GL Sensor Signal to Obtain
2nd CAL Value

348 — Compare 1st CAL Value and
2nd CAL Value to Threshold

350 — Satisfy
Threshold? — Yes — B

No

352 — Adjust Machine Setting

354 — Perform New CAL Process

Fig. 3B

400

402 — Start

404 — Perform CAL Process?
No

Yes

406 — Machine Stable?
No

Yes

408 — Receive Grain Loss Detection from Grain Loss Sensors

410 — Command Manual Grain Loss Measurement

412 — Receive Grain Loss Measurement

414 — Compare Grain Loss Detection to Grain Loss Measurement

416 — Adjust Machine Setting Based on Comparison

418 — Grain Loss Change Based on Machine Setting Adjustment?
No

Yes

Continue/Perform Harvesting Operation

420

Fig. 4

502 — ( Start )

500

Perform CAL Process? — No

504

Yes

No — Machine Stable?

506

Yes

508 — Detect 1st Grain Loss via Grain Loss Sensors

510 — Command Grain Loss Measurement

512 — Receive Grain Loss Measurement via Control System or Operator Interface

514 — Display Grain Loss Split between Grain Loss at Seperator and Grain Loss at Shoe

516 — Grain Loss Split Satisfy Threshold? — Yes — Perform Another CAL Process? — Yes

520

Communicate Machine Setting Change to Adjust Grain Loss Split ← No

518

522 — No

Continue/Perform Harvesting Operation

**Fig. 5**

Fig. 6

702 — ( Start )

700

704 — Perform Harvesting Operation

706 — Perform CAL Process? —— No

Yes

708 — Machine Stable? —— No

Yes

710 — Initiate 1st CAL Process

712 — Receive 1st Grain Loss Sensor Signals from Loss Sensors

714 — Associate Sensor Signals to 1st Machine Setting

716 — Receive 1st Grain Loss Measurement

718 — Determine 1st Calibration Corrective Factor

720 — Adjust 1st Machine Setting to 2nd Machine Setting

722 — Initiate 2nd CAL Process

724 — Receive 2nd Grain Loss Sensor Signals from Loss Sensors

726 — Receive 2nd Grain Loss Measurement

728 — Determine 2nd Calibration Corrective Factor

730 — Display Grain Loss Based on 2nd Calibration Corrective Factor

( A )

Fig. 7A

34

700

734

A

Perform
Another CAL
Process? —732

No → Resume Harvesting Operation

Yes

Adjust 2nd Machine Setting
to Another Machine Setting —736

Initiate CAL Process —738

Receive Grain Loss Sensor
Signals from Loss Sensors —740

Receive Another Grain Loss
Measurement —742

Determine Another Calibration
Corrective Factor —744

Display Grain Loss Based
on Another Calibration
Corrective Factor —746

Fig. 7B

| Calibration Point | Ground Speed | Recorded Grain Loss Signals | Grain Loss Measurement | Displayed Grain Loss (Without Corrective Factor) | Displayed Grain Loss (Corrected) |
|---|---|---|---|---|---|
| Example Units | mph | N/A | Bushels/Acre | Bushels/Acre | Bushels/Acre |
| 1st Calibration | 5.0 | 3.0 | 1.0 | 1.00 | 1.00 |
| 2nd Calibration | 2.5 | 1.0 | 0.4 | 0.33 | 0.40 |
| Post Calibration | 7.0 | 8.0 | N/A | 2.67 | 2.16 |

Fig. 8

902 — ( Start )

900

Perform Harvesting Operation

904

Perform CAL Process? — No

906

Yes

No — Machine Stable?

908

910

Yes

Initiate CAL Process

912

Receive Grain Loss Signals by Grain Loss Sensors

914

Identify Location in Field Where Grain Loss is Detected by Grain Loss Sensors

916

Store Location and Grain Loss Signals by Controller

918

Receive Grain Loss Measurement at a 1st Location

920

Compare Grain Loss Signals at 1st Location to Grain Loss Measurement

Determine Calibration Corrective Factor

922

Display Grain Loss Based on Calibration Corrective Factor

924

Fig. 9

37